# EUROPEAN PATENT APPLICATION

(11) **EP 4 632 022 A1**
(43) Date of publication of application: **15.10.2025**
(21) Application number: 23900224.9
(22) Date of filing: 21.07.2023
(51) Int. Cl.: C09D 11/38, B41M 5/00

(54) **ULTRAVIOLET CURABLE INKJET INK AND METHOD FOR PRODUCING PRINTED MATERIAL**

(30) Priority: 05.12.2022 JP 2022193896
(71) Applicant: artience Co., Ltd., Chuo-ku Tokyo 104-0031 (JP); TOYOCOLOR CO., LTD., Tokyo 104-8381 (JP)
(72) Inventor: YOSHIKAWA, Takumi, Tokyo 104-8381 (JP)
(74) Representative: SSM Sandmair
(86) International application number: PCT/JP2023/026848
(87) International publication number: WO 2024/122094

(57) **Abstract**

An ultraviolet curable inkjet ink including a colorant, a polymerizable compound, and a photopolymerization initiator, wherein 65% by mass or more of the polymerizable compound is a polyfunctional polymerizable compound, the polymerizable compound contains a polymerizable compound (A) having a (meth)acryloyl group and a chain hydrocarbon group having 4 to 12 carbon atoms which may be branched, the content of an oligomer and the content of a polymerizable compound having a specific structure are each limited to a specific amount or less, and the photopolymerization initiator contains ethoxyphenyl (2,4,6-trimethylbenzoyl) phosphine oxide and another acylphosphine oxide-type photopolymerization initiator (B).

## Description

### Technical Field

Embodiments of the present invention relate to an ultraviolet curable inkjet ink and a method for manufacturing a printed matter using the ultraviolet curable inkjet ink.

### Background Art

In the recent printing industry, adoption of a digital printing method capable of performing printing without using a plate has been rapidly advanced instead of a forme-based printing method such as an offset printing method, a flexographic printing method, or a gravure printing method. This is because, for example, in the digital printing method, since plate making is unnecessary, a printed matter can be obtained at low cost and in a short time, a printing apparatus is smaller and less expensive than a conventional forme-based printing machine, and a uniform printed matter can be easily obtained regardless of skill of a person engaged in printing.

In particular, an inkjet printing method, which is a type of digital printing method, is excellent in various aspects such as the size and cost of a printing apparatus, running cost during printing, the ease of full-color printing, its high printing speed, and the like, as compared with other digital printing methods, and therefore use of the inkjet printing method particularly in the industrial printing industry is progressing.

An ink used in the inkjet printing method is in a wide variety of forms, such as a water type, an oil type, a solvent type, and an active energy ray curable type. In particular, in recent years, there has been an increasing demand for an active energy ray curable ink, particularly an ultraviolet (UV) curable ink because of its characteristics, such as applicability to a non-absorbent substrate including plastic and glass, a speed of drying (curing) time, and strength of a printed matter.

In addition, in recent years, technological innovation of an inkjet head has progressed, and an inkjet head capable of discharging an ink at a high frequency of 20 kHz or more is also being sold. Furthermore, an ultraviolet curable inkjet line printer is being sold in which one or a plurality of these inkjet heads are mounted so as to have a length equal to or longer than the width of a substrate, and is combined with the ultraviolet curable ink. In the ultraviolet curable inkjet line printer, an ultraviolet curable ink is discharged only once onto a substrate conveyed below an inkjet head, and print image formation is completed.

In the ultraviolet curable inkjet line printer, it is necessary to sufficiently cure the ultraviolet curable ink (ultraviolet curable inkjet ink) discharged from the inkjet head onto the substrate by irradiation with an ultraviolet ray emitted from an ultraviolet ray generation source installed on a downstream side of the inkjet head. A print image includes not only an image having a high coverage rate (for example, a solid image (an image in which an ink is applied to the entire substrate)) but also an image having a low coverage rate (for example, a light color image). Therefore, regardless of which image is printed, it is important to sufficiently cure the ultraviolet curable ink used for the printing.

From the above viewpoint, in the ultraviolet curable inkjet ink, it is important to blend a polymerizable compound excellent in curability and a photopolymerization initiator capable of effectively generating a radical or the like serving as a starting point of a polymerization reaction of the polymerizable compound by an ultraviolet ray. For example, it is conceivable to use a polymerizable compound having a large number of polymerizable groups and to blend a large amount of a photopolymerization initiator.

However, it is preferable to design the ultraviolet curable inkjet ink to have a low viscosity in order to smoothly and stably discharge the ink from an inkjet head. For this purpose, it is necessary to design the ink by using a polymerizable compound having a low viscosity or reducing the amount of a photopolymerization initiator. Therefore, there are limitations in using a polymerizable compound having a large number of polymerizable groups, which generally has a high viscosity, and the blending of a large amount of a photopolymerization initiator, which causes an increase in viscosity of the ink.

On the other hand, in a case where a photopolymerization initiator that is liquid at ordinary temperature is used, even when a certain amount of the photopolymerization initiator is used, it is possible to prevent an increase in viscosity of the ultraviolet curable inkjet ink. As an example of the photopolymerization initiator, which is liquid at ordinary temperature, there is ethoxyphenyl (2,4,6-trimethylbenzoyl) phosphine oxide (hereinafter, also referred to as "EO-TPO" in the present discription), which is a type of acylphosphine oxide-type photopolymerization initiator.

However, as a result of studies by the present inventors, it has been found that it is difficult to ensure both the above described curability for various types of images and stability during discharge described above only by using EO-TPO.

As a document disclosing a specific example of an ultraviolet curable inkjet ink using EO-TPO, for example, Patent Literature 1 discloses an ink containing benzoylalkylphosphinate (including EO-TPO) and/or bisacylphosphine oxide (bis(2,4,6-trimethylbenzoyl)-phenylphosphine oxide or the like described later) and benzyl acrylate, which is excellent in curability and adhesiveness (substrate adhesion). However, in Patent Literature 1, discharge stability is not considered. In an additional test conducted by the present inventors, poor discharge stability was confirmed (details will be described later).

Patent Literature 2 discloses an ink containing an amine-modified oligomer, a specific diacrylate compound, EO-TPO, oligo [2-hydroxy-2-methyl-1-(methylvinyl) phenyl] propanone], and the like as an active energy ray-curable inkjet ink having characteristics such as low viscosity, low odor, and high curability. However, also in Patent Literature 2, studies on discharge stability are insufficient.

As described above, there has been no ultraviolet curable inkjet ink that has both curability and discharge stability, and further has excellent strength of a printed matter (ink film).

### Citation List

### Patent Literature

Patent Literature 1: JP 2022-525271 A
Patent Literature 2: WO 2022/024706 A

### Summary of Invention

### Technical Problem

The present invention has been made to solve the above-described problems, and the object of the present invention is to provide an ultraviolet curable inkjet ink that achieves both curability and discharge stability, and also has excellent strength of a printed matter (ink film), and a method for manufacturing a printed matter using the ultraviolet curable inkjet ink.

### Solution to Problem

As a result of intensive studies by the present inventors to solve the above problems, an ultraviolet curable inkjet ink having the following configuration has been found, and the present invention was completed.

That is, embodiments of the present invention relate to the following [1] to [5]. Note that the present invention is not limited to the following embodiments, and includes various embodiments.
[1] An ultraviolet curable inkjet ink including a colorant, a polymerizable compound, and a photopolymerization initiator, wherein
   65% by mass or more of the polymerizable compound is a polyfunctional polymerizable compound,
   the polyfunctional polymerizable compound and/or a polymerizable compound other than the polyfunctional polymerizable compound contains a polymerizable compound (A) having a (meth)acryloyl group and a chain hydrocarbon group having 4 to 12 carbon atoms which may be branched,
   the polymerizable compound does not contain an oligomer, or the content of the oligomer is 5% by mass or less in the polymerizable compound,
   the polymerizable compound does not contain a compound represented by the following general formula (C), or a content of the compound represented by the following general formula (C) is 15% by mass or less in the ultraviolet curable inkjet ink, and
   the photopolymerization initiator includes ethoxyphenyl (2,4,6-trimethylbenzoyl) phosphine oxide and an acylphosphine oxide-type photopolymerization initiator (B) other than the ethoxyphenyl (2,4,6-trimethylbenzoyl) phosphine oxide.

      General Formula (C): CH₂ = CH - CO - (O - CH₂CH₂)ₙ - O - CO - CH = CH₂
   (In general formula (C), n represents an integer of 2 to 10.)
[2] The ultraviolet curable inkjet ink according to [1], wherein a content of the polymerizable compound (A) is 10 to 60% by mass in the ultraviolet curable inkjet ink.
[3] The ultraviolet curable inkjet ink according to [1] or [2], wherein a total amount of a content of the ethoxyphenyl (2,4,6-trimethylbenzoyl) phosphine oxide and a content of the acylphosphine oxide-type photopolymerization initiator (B) is 8 to 20% by mass in the ultraviolet curable inkjet ink.
[4] The ultraviolet curable inkjet ink according to any one of [1] to [3], wherein the photopolymerization initiator further contains a benzophenone-type photopolymerization initiator and/or a thioxanthone-type photopolymerization initiator.
[5] A method for manufacturing a printed matter, the method including: a step of discharging the ultraviolet curable inkjet ink according to any one of [1] to [4] onto a substrate; and a step of irradiating the substrate with an ultraviolet ray from an ultraviolet ray irradiation means.

The disclosure of the present application relates to subject matters described in Japanese Patent Application No. 2022-193896 filed on December 5, 2022, the entire disclosure of which is incorporated herein by reference.

### Advantageous Effects of Invention

According to the present invention, it is possible to provide an ultraviolet curable inkjet ink that achieves both curability and discharge stability, and also has excellent strength of a printed matter (ink film), and a method for manufacturing a printed matter using the ultraviolet curable inkjet ink.

### Description of Embodiments

Hereinafter, the present invention will be described in detail. Note that the present invention is not limited to the following embodiments, and various modifications can be made without departing from the summary of the present invention. Unless otherwise specified, "parts" represents "parts by mass", and "%" represents "% by mass".

As described above, one embodiment of the present invention relates to an ultraviolet curable inkjet ink (hereinafter, also simply referred to as "ink of the present invention"), and is an ultraviolet curable inkjet ink including a colorant, a polymerizable compound, and a photopolymerization initiator, wherein
65% by mass or more of the polymerizable compound is a polyfunctional polymerizable compound,
the polyfunctional polymerizable compound and/or a polymerizable compound other than the polyfunctional polymerizable compound contains a polymerizable compound (A) having a (meth)acryloyl group and a chain hydrocarbon group having 4 to 12 carbon atoms which may be branched,
the polymerizable compound does not contain an oligomer, or a content of the oligomer is 5% by mass or less in the polymerizable compound,
the polymerizable compound does not contain a compound represented by the above general formula (C), or a content of the compound represented by general formula (C) above is 15% by mass or less in the ultraviolet curable inkjet ink, and
the photopolymerization initiator includes ethoxyphenyl (2,4,6-trimethylbenzoyl) phosphine oxide and an acyl phosphine oxide-type photopolymerization initiator (B) other than the ethoxyphenyl (2,4,6-trimethylbenzoyl) phosphine oxide.

Curability is one of the common characteristics required for ultraviolet curable inks, not limited to just inkjet inks. As described above, there are various types of images to be printed, and it is important to sufficiently cure an ultraviolet curable ink used for printing in all the images. That is, for the ultraviolet curable ink, curability which can be broadly classified into: curability of the surface of a printed matter having an image with a high coverage rate or a printed matter having an image with a low coverage rate (hereinafter, referred to as "surface curability"); and curability for the inside of the printed matter having an image with a high coverage rate (hereinafter, referred to as "internal curability") are both required.

On the other hand, the acylphosphine oxide-type photopolymerization initiator is a material capable of absorbing not only an ultraviolet ray having a short wavelength but also an ultraviolet ray in the vicinity of 400 to 450 nm to generate a radical. In general, an ultraviolet ray having a longer wavelength is more likely to reach the inside of an ink film, and thus the acylphosphine oxide-type photopolymerization initiator is known as a material effective in improving internal curability of the ink film. In addition, an acylphosphine oxide-type photopolymerization initiator and a photopolymerization initiator other than the acylphosphine oxide-type photopolymerization initiator are often used in combination from the viewpoint of achieving both the surface curability and the internal curability described above. An α-hydroxyamine-type photopolymerization initiator or a benzophenone-type photopolymerization initiator used as a photopolymerization initiator other than the acylphosphine oxide-type photopolymerization initiator has a property of strongly absorbing an ultraviolet ray of 200 to 350 nm, and is a material effective in improving surface curability of an ink film.

In this regard, in curing on a surface of an ink film, polymerization inhibition (oxygen inhibition) by the oxygen present near the ink film occurs. Therefore, in order to achieve both the surface curability and the internal curability, it is suitable to add a certain amount of the above-described photopolymerization initiator, which is effective in improving the surface curability, to the ink. However, in this case, most part of the ultraviolet ray irradiated is consumed on the surface of the ink film. Therefore, the ultraviolet ray hardly penetrates the inside of the ink film, and the internal curability may deteriorate.

Also, many of the photopolymerization initiators described above are solid at ordinary temperature. In order to achieve both surface curability and internal curability, it is effective to use an acylphosphine oxide-type photopolymerization initiator and a photopolymerization initiator other than the acylphosphine oxide-type photopolymerization initiator in combination. However, when such a large amount of photopolymerization initiator is blended in an ultraviolet curable inkjet ink in this way, viscosity of the ink may increase, leading to deterioration of discharge stability.

Therefore, as a result of diligent factor examination by the present inventors to solve the above-described problems, it has been clarified that by using in combination, an ethoxyphenyl (2,4,6-trimethylbenzoyl) phosphine oxide and a bifunctional polymerizable compound (A) (hereinafter, also simply referred to as a polymerizable compound (A)) having a (meth)acryloyl group and a chain hydrocarbon group having 4 to 12 carbon atoms which may be branched, and further using an acylphosphine oxide-type photopolymerization initiator (B) (hereinafter, also simply referred to as a photopolymerization initiator (B)) other than the ethoxyphenyl (2,4,6-trimethylbenzoyl) phosphine oxide in combination, both surface curability and internal curability can be achieved, and furthermore, discharge stability is also improved. Although a detailed mechanism thereof is unclear, the present inventors presume the mechanism as follows.

2,4,6-Trimethylbenzoyl-diphenylphosphine oxide and bis(2,4,6-trimethylbenzoyl)-phenylphosphine oxide, which are generally known as acylphosphine oxide-type photopolymerization initiators, each have three aromatic rings in their molecular structures. On the other hand, the molecular structure of EO-TPO has only two aromatic rings, and has an ethylene oxide group instead. Both the aromatic ring and a medium/long chain hydrocarbon group have strong hydrophobicity, and weak affinity called CH/π interaction also acts therebetween. Therefore, it is considered that the aromatic ring has affinity with a chain hydrocarbon group having 4 to 12 carbon atoms which may be branched. On the other hand, affinity between the ethylene oxide group and the chain hydrocarbon group having 4 to 12 carbon atoms which may be branched is considered to be weaker than that in the case of the aromatic ring. Therefore, when any one of the acylphosphine oxide-type photopolymerization initiators listed above is mixed with the polymerizable compound (A), it is presumed that 2,4,6-trimethylbenzoyl-diphenylphosphine oxide and bis(2,4,6-trimethylbenzoyl)-phenylphosphine oxide are compatible with the polymerizable compound (A) whereas EO-TPO is hardly compatible with the polymerizable compound (A).

As a result, it is considered that in a droplet of the ink of the present invention that impacts onto a substrate, EO-TPO is oriented on the surface of the droplet, and by irradiating the droplet with an ultraviolet ray in this state, the EO-TPO generates a radical, and also improves surface curability of the ink film. On the other hand, since the photopolymerization initiator (B) (for example, 2,4,6-trimethylbenzoyl-diphenylphosphine oxide or bis(2,4,6-trimethylbenzoyl)-phenylphosphine oxide) has high compatibility with the polymerizable compound (A) and is uniformly present in the ink droplet, it is presumed that the photopolymerization initiator (B) mainly contributes to improvement in internal curability of the ink film.

Note that the acylphosphine oxide-type photopolymerization initiator generally exhibits a photobleaching effect. The photobleaching effect is an effect that an ultraviolet absorbing function disappears in a photopolymerization initiator after decomposition, and ultraviolet penetrability to the inside of an ink film is improved. As described above, in the ink of the present invention, since EO-TPO is oriented on the droplet surface of the ink, along with the progress of a photopolymerization reaction, the ethoxyphenyl (2,4,6-trimethylbenzoyl) phosphine oxide exhibits the photobleaching effect, and an ultraviolet ray easily penetrates the ink film, whereby reactivity of the photopolymerization initiator (B) is considered to be further improved. As a result, in the present invention, it is considered that internal curability can be further improved, and both the internal curability and surface curability can be achieved, which could not be achieved by conventional inks.

Note that, in the studies by the present inventors, it has been found that by setting the content of a compound represented by the general formula (C) to 15% by mass or less in the ultraviolet curable inkjet ink, surface curability of the ink can be stably improved. This is presumed to be because when a certain amount or more of the compound represented by the general formula (C) is used, compatibility of EO-TPO with the ink increases, and the EO-TPO becomes disoriented on the surface of the ink droplet.

In addition, in the ink of the present invention, since affinity between EO-TPO and the polymerizable compound (A) is weak, it is considered that intermolecular interaction between the two hardly occurs. As a result, in the ink of the present invention, expression of non-Newtonian properties due to the intermolecular interaction is prevented, and discharge stability is also improved.

Note that, when the content of an oligomer is more than 5% by mass in the polymerizable compound, discharge stability may deteriorate. Although detailed reasons are unclear, one of the factors considered is that generally, an oligomer has a plurality of bonds and functional groups, such as a urethane bond and an ester bond, which easily form intermolecular interaction. In addition, as in the case of the compound represented by the general formula (C) described above, use of a certain amount or more of an oligomer may also contribute to a decrease in surface curability, which is considered to be due to an increase in the compatibility of EO-TPO.

Note that, when the content of a polyfunctional polymerizable compound in the polymerizable compound is less than 65% by mass, strength of an ink film may largely deteriorate. This is presumed to be because a crosslinking density in the ink film decreases by the decrease in the amount of the polyfunctional polymerizable compound in the polymerizable compound.

As described above, according to the configuration of the ink of the present invention, it is possible to achieve both the above-described effects at the same time and at a favorable level.

Subsequently, components configuring the ink of the present invention will be described in detail below.

### <Polymerizable compound>

The polymerizable compound in the ink of the present invention has a function curing a composition containing the polymerizable compound by causing a polymerization or crosslinking reaction with an initiating species, such as a radical generated from a photopolymerization initiator and the like, as described later.

The polymerizable compound is not particularly limited as long as it has the characteristics described above, and any type of monomer, oligomer, and polymer can be used. Note that the "oligomer" and the "polymer" are polymers in which a plurality of monomers are bonded to each other, and both are classified depending on the polymerization degree. That is, in the present description, one having the polymerization degree of 2 to 5 is referred to as an "oligomer", and one having the degree of polymerization of 6 or more is referred to as a "polymer".

In the present invention, a polymerizable compound which is radically polymerizable (radically polymerizable compound) can be preferably used from the viewpoint of excellent curability of a thin film and a thick film. Examples of a polymerizable group of the radically polymerizable compound include a (meth)acryloyl group, a vinyl ether group, an allyl group, a vinyl group (a vinyl ether group and an allyl group are excluded), and an unsaturated carboxylic acid group. In particular, a compound having a (meth)acryloyl group and/or a vinyl ether group can be suitably used. Note that, in the present application, the "(meth)acryloyl group" refers to an acryloyl group and/or a methacryloyl group.

Furthermore, in the present invention, the radically polymerizable compound may be a monofunctional polymerizable compound or a bi- or higher functional polyfunctional polymerizable compound. Only one polymerizable compound may be used, or two or more polymerizable compounds may be mixed and used for the purpose of adjusting the reaction rate, physical properties of an ink film, physical properties of the ink, and the like. When a ratio of the monofunctional polymerizable compound in the polymerizable compound is large, the ink film tends to be flexible. When the ratio of the polyfunctional polymerizable compound in the polymerizable compound is large, the curability of a thin film and a thick film, and the strength of the cured ink film tend to improve. As described above, in the case of the ink of the present invention, the content of the polyfunctional polymerizable compound in the polymerizable compound only needs to be 65% by mass or more from the viewpoint of improving both curability of a thin film and a thick film, and strength of the cured ink film. The content is preferably 80% by mass or more, and particularly preferably 90% by mass or more.

In the present application, the term "monofunctional" refers to a compound having only one polymerizable group in one molecule. "Bifunctional" and "trifunctional" refer to compounds having two and three polymerizable groups in one molecule, respectively, and bi- and higher functional are collectively referred to as "polyfunctional".

### (Polymerizable compound (A))

The ink of the present invention contains at least a polymerizable compound (A) having a (meth)acryloyl group and a chain hydrocarbon group having 4 to 12 carbon atoms which may be branched as a polymerizable compound. As described above, by use of the polymerizable compound (A) together with EO-TPO, EO-TPO is oriented on a surface of a droplet that impacts onto a substrate. By irradiation with an ultraviolet ray in this state, EO-TPO generates a radical, and it is also expected to improve surface curability of the ink film.

The polymerizable compound (A) is a compound consisting only of one or more (meth)acryloyloxy groups and an optionally branched chain hydrocarbon group having 4 to 12 carbon atoms. The chain hydrocarbon group consists only of carbon atoms and hydrogen atoms, and does not contain any other elements. In the polymerizable compound (A), the chain hydrocarbon group may be, for example, an alkyl group having 4 to 12 carbon atoms or an alkylene group having 4 to 12 carbon atoms. These groups are each bonded to a (meth)acryloyloxy group to form an alkyl (meth)acrylate, an alkylenediol di(meth)acrylate, and the like. On the other hand, since the chain hydrocarbon group is a group having a linear structure having 4 to 12 carbon atoms or a group having a branched structure having 4 to 12 carbon atoms, the chain hydrocarbon group does not include a ring structure. That is, for example, a chain hydrocarbon group containing a carbon atom configuring a ring structure, such as an aromatic hydrocarbon group, an alicyclic hydrocarbon group, or a heterocyclic structure, is not included in the "chain hydrocarbon group having 4 to 12 carbon atoms" even if the number of carbon atoms thereof is 4 to 12. Therefore, for example, a compound having a ring structure, such as cyclic trimethylolpropane formal (meth)acrylate or cyclohexyl (meth)acrylate, is not included in the "polymerizable compound (A)".

Since the above-described weak affinity with EO-TPO and the above-described strength of affinity with the acylphosphine oxide-type photopolymerization initiator having many aromatic rings in a molecular structure are suitable, the above-described mechanism functions well, and an ink in which all of internal curability, surface curability, discharge stability, and strength of a printed matter are particularly excellent can be obtained. For these reasons, the number of carbon atoms of the chain hydrocarbon group is preferably 4 to 12, and particularly preferably 5 to 8. For the same reason, the maximum chain length of the chain hydrocarbon group is preferably 3 to 12, more preferably 4 to 10, and particularly preferably 5 to 8.

Note that, when the chain hydrocarbon group has no branched structure, the "maximum chain length" is the same as the number of carbon atoms of the chain hydrocarbon group. On the other hand, when the chain hydrocarbon group has a branched structure, the "maximum chain length" refers to the largest number among the numbers of carbon atoms counted excluding the branched structure. For example, in a case of 2-ethylhexyl (meth)acrylate, the number of carbon atoms is 8, and the maximum chain length is 6.

Examples of the polymerizable compound (A) include: a polyfunctional polymerizable compound such as 1,4-butanediol di(meth)acrylate, 1,6-hexanediol di(meth)acrylate, 1,8-octanediol di(meth)acrylate, 1,9-nonanediol di(meth)acrylate, 1, 10-decanediol di(meth)acrylate, 1,12-dodecanediol di(meth)acrylate, 3-methyl-1,5-pentanediol di(meth)acrylate, neopentyl glycol di(meth)acrylate, trimethylolpropane tri(meth)acrylate, trimethylolethane tri(meth)acrylate, or sorbitol hexa(meth)acrylate; and a monofunctional polymerizable compound such as isobutyl (meth)acrylate, isoamyl (meth)acrylate, n-hexyl (meth)acrylate, n-octyl (meth)acrylate, and the like, 2-ethylhexyl (meth)acrylate, isooctyl (meth)acrylate, isononyl (meth)acrylate, isodecyl (meth)acrylate, or lauryl (meth)acrylate.

Note that, in the present application, "(meth)acrylate" refers to acrylate and/or methacrylate. In the present application, "EO" refers to "ethylene oxide", and "PO" refers to "propylene oxide".

Among the compounds listed above, a polyfunctional polymerizable compound is preferably used from the viewpoint of obtaining an ink film having that is excellent in curability of a thin film and a thick film and has high strength. On the other hand, when the number of the polymerizable groups is 1 or 2, a polymerization reaction starts after a sufficient amount of EO-TPO is oriented on the surface of an ink droplet, and therefore the ink has an excellent balance between surface curability and internal curability. Therefore, the polymerizable compound (A) preferably contains at least one selected from the group consisting of a monofunctional polymerizable compound (also referred to as a monofunctional monomer) and a bifunctional polymerizable compound (also referred to as a bifunctional monomer) from the viewpoint of obtaining an ink film excellent in surface curability and internal curability and also excellent in strength, regardless of the film thickness. In particular, the polymerizable compound (A) preferably contains at least a bifunctional polymerizable compound.

It is suitable to use a compound in which all the polymerizable groups are acryloyl groups from the viewpoint of the curability. Therefore, in one embodiment, the polymerizable compound (A) preferably contains a bifunctional monomer having two acryloyl groups. Furthermore, in particular, it is preferable to use one or more compounds selected from the group consisting of 1,4-butanediol diacrylate, 1,6-hexanediol diacrylate, 1,8-octanediol diacrylate, 1,9-nonanediol diacrylate, 3-methyl-1,5-pentanediol diacrylate, and neopentyl glycol diacrylate from the viewpoint of forming an ink excellent in discharge stability. It is particularly preferable to use one or more compounds selected from the group consisting of 1,6-hexanediol diacrylate, 3-methyl-1,5-pentanediol diacrylate, and neopentyl glycol diacrylate from the viewpoint of achieving both discharge stability and curability of a thin film and a thick film at a high level. In consideration of the above-described suitable number of carbon atoms and maximum chain length of the chain hydrocarbon group, it is most preferable to use at least one selected from the group consisting of 1,6-hexanediol diacrylate and 3-methyl-1,5-pentanediol diacrylate.

The amount of the polymerizable compound (A) contained in the ink of the present invention is preferably 10 to 60% by mass, more preferably 15 to 50% by mass, still more preferably 15 to 40% by mass, and particularly preferably 20 to 40% by mass. When the amount of the polymerizable compound (A) is within the above ranges, the above-described orientation of EO-TPO to a droplet surface can be encouraged, and an ink excellent in curability of a thin film and a thick film can be obtained. In addition, it is suitable to set the amount of the polymerizable compound (A) within the above ranges from the viewpoint of improving discharge stability of the ink.

In addition, the polymerizable compound (A) is contained in an amount of preferably 2 to 25 times, more preferably 4 to 20 times, particularly preferably 6 to 15 times the content of EO-TPO in the ink of the present invention from the viewpoint of suitably exhibiting the above-described effect of orientation of EO-TPO to the droplet surface.

### (Other polymerizable compound)

The ink of the present invention may contain a polymerizable compound other than the compound represented by the polymerizable compound (A) (hereinafter referred to as "other polymerizable compound"). Note that, as described above, the content of the compound represented by the following general formula (C) is preferably 15% by mass or less (the compound represented by the following general formula (C) does not have to be contained) in the ultraviolet curable inkjet ink, and the content of an oligomer is preferably 5% by mass or less (the oligomer does not have to be contained) in the polymerizable compound.

General Formula (C): CH₂ = CH - CO - (O - CH₂CH₂)ₙ - O - CO - CH = CH₂

In the above general formula (C), n represents an integer of 2 to 10.

### (Compound represented by general formula (C))

Specific examples of the compound represented by the above general formula (C) include diethylene glycol diacrylate, triethylene glycol diacrylate, and a compound having acryloyl groups at both terminals of four or more connected ethylene oxide groups (polyethylene glycol (the number of ethylene oxide groups ≥ 4) diacrylate).

When the ink of the present invention contains the compound represented by the above general formula (C), diethylene glycol diacrylate and/or triethylene glycol diacrylate is preferably used because an ink particularly excellent in discharge stability and curability of a thin ink film and a thick ink film can be obtained.

When the ink contains the compound represented by the above general formula (C), the content thereof is preferably 10% by mass or less, more preferably 5% by mass or less, and particularly preferably 3% by mass or less, in the total amount of the ink from the viewpoint of achieving both discharge stability and curability of a thin ink film and a thick ink film.

### (Oligomer)

When the ink of the present invention contains an oligomer, an oligomer having a (meth)acryloyl group as the polymerizable group can be preferably used from the viewpoint of obtaining an ink film excellent in curability of both thin and thick films, and also in strength. For the same reason, the number of polymerizable groups contained in the oligomer per molecule is preferably 1 to 15, more preferably 1 to 6, still more preferably 1 to 4, and particularly preferably 1 to 2. Furthermore, a weight average molecular weight of the oligomer is preferably 400 to 10,000, and particularly preferably 500 to 5,000 from the viewpoint of discharge stability.

Note that the weight average molecular weight can be determined using gel permeation chromatography (hereinafter, referred to as GPC). Specifically, the weight average molecular weight is a value obtained as a polystyrene-equivalent molecular weight measured using DMF as a developing solvent in GPC (for example, "HLC-8320GPC" manufactured by Tosoh Corporation) equipped with an RI detector using a TSKgel column (manufactured by Tosoh Corporation).

Examples of the oligomer having a (meth)acryloyl group include a urethane (meth)acrylate oligomer such as an aliphatic urethane (meth)acrylate oligomer or an aromatic urethane (meth)acrylate oligomer, an acrylic (meth)acrylate oligomer, a polyester (meth)acrylate oligomer, a polyether (meth)acrylate oligomer, and an epoxy (meth)acrylate oligomer. The oligomer may have a functional group such as an amino group, a hydroxyl group, or a carboxy group.

When the ink of the present invention contains an oligomer having a functional group such as an amino group, a hydroxyl group, or a carboxy group, a weight average molecular weight thereof is preferably 100 to 2,000, and particularly preferably 300 to 1,600. When the weight average molecular weight of the oligomer is within the above ranges, it is possible to achieve both discharge stability and strength of an ink film.

In addition, when the oligomer is contained, the content thereof is preferably 3% by mass or less, more preferably 2% by mass or less, and particularly preferably 1% by mass or less, in the total amount of the ink from the viewpoint of discharge stability and strength of an ink film.

As the other polymerizable compound other than the compound represented by the above general formula (C) and the oligomer, a monofunctional polymerizable compound (also referred to as a monofunctional monomer) or a polyfunctional polymerizable compound (also referred to as a polyfunctional monomer) other than the polymerizable compound (A) may be contained.

Examples of the monofunctional monomer include 2-phenoxyethyl (meth)acrylate, benzyl (meth)acrylate, (ethoxylated (or propoxylated) 2-phenoxyethyl (meth)acrylate, dicyclopentenyl (oxyethyl) (meth)acrylate, phenoxydiethylene glycol (meth)acrylate, 2-methoxyethyl (meth)acrylate, methoxytriethylene glycol (meth)acrylate, 2-ethoxyethyl (meth)acrylate, 2-(2-ethoxyethoxy) ethyl (meth)acrylate, methoxydipropylene glycol (meth)acrylate, dipropylene glycol (meth)acrylate, EO-modified o-phenylphenol acrylate, 2-ethylhexyl EO-modified acrylate, β-carboxylethyl (meth)acrylate, cyclic trimethylolpropane formal (meth)acrylate, cyclohexyl (meth)acrylate, tetrahydrofuryl (meth)acrylate, isobornyl (meth)acrylate, norbornyl (meth)acrylate, dicyclopentanyl (meth)acrylate, stearyl (meth)acrylate, tridecyl (meth)acrylate, caprolactone (meth)acrylate, 2-hydroxy-3-phenoxypropyl (meth)acrylate, 1,4-cyclohexanedimethanol (meth)acrylate, 2-hydroxyethyl (meth)acrylate, 2-hydroxypropyl (meth)acrylate, 4-hydroxybutyl acrylate, N-vinylcaprolactam, N-vinylpyrrolidone, 5-methyl-3-vinyloxazolidin-2-one, acryloylmorpholine, and N-acryloyloxyethylhexahydrophthalimide.

Examples of the bifunctional monomer include ethoxylated cyclohexane methanol di(meth)acrylate, ethylene glycol di(meth)acrylate, diethylene glycol dimethacrylate, triethylene glycol dimethacrylate, polyethylene glycol (number of EO groups ≥ 4) dimethacrylate, EO-modified bisphenol A di(meth)acrylate, bisphenol F polyethoxy di(meth)acrylate, propoxylated ethoxylated bisphenol A di(meth)acrylate, propoxylated bisphenol A di(meth)acrylate, ethoxylated bisphenol A di(meth)acrylate, isocyanuric acid EO-modified di(meth)acrylate, tricyclodecane di(meth)acrylate, dipropylene glycol di(meth)acrylate, tripropylene glycol di(meth)acrylate, dimethylol tricyclodecane di(meth)acrylate, cyclohexane dimethanol di(meth)acrylate, trimethylolpropane di(meth)acrylate, dicyclopentanyl di(meth)acrylate, hydroxypivalic acid neopentyl glycol di(meth)acrylate, PO-modified (propoxylated) neopentyl glycol di(meth)acrylate, EO-modified neopentyl glycol di(meth)acrylate, neopentyl glycol-modified trimethylolpropane di(meth)acrylate, and 2-(2-vinyloxyethoxy) ethyl (meth)acrylate.

Among these monomers, it is preferable to use one or more compounds selected from the group consisting of dipropylene glycol di(meth)acrylate, tripropylene glycol di(meth)acrylate, and 2-(2-vinyloxyethoxy) ethyl (meth)acrylate from the viewpoint of achieving both surface curability and internal curability. It is particularly preferable to use one or more compounds selected from the group consisting of dipropylene glycol di(meth)acrylate and 2-(2-vinyloxyethoxy) ethyl (meth)acrylate.

Examples of the trifunctional monomer include tetramethylolmethane tri(meth)acrylate, pentaerythritol tri(meth)acrylate, dipentaerythritol tri(meth)acrylate, trimethylolpropane tri((meth)acryloyloxypropyl) acrylate, isocyanuric acid alkylene oxide-modified tri(meth)acrylate, propoxylated dipentaerythritol tri(meth)acrylate, tri((meth)acryloyloxyethyl) isocyanurate, hydroxypivalaldehyde-modified dimethylolpropane tri(meth)acrylate, sorbitol tri(meth)acrylate, EO-modified (ethoxylated) trimethylolpropane tri(meth)acrylate, PO-modified (propoxylated) trimethylolpropane tri(meth)acrylate, ethoxylated glyceryl tri(meth)acrylate, and propoxylated glyceryl tri(meth)acrylate.

Examples of the tetrafunctional monomer include pentaerythritol tetra(meth)acrylate, sorbitol tetra(meth)acrylate, ditrimethylolpropane tetra(meth)acrylate, propoxylated dipentaerythritol tetra(meth)acrylate, ethoxylated pentaerythritol tetra(meth)acrylate, and tetramethylolmethane tetra(meth)acrylate.

Examples of the pentafunctional monomer include sorbitol penta(meth)acrylate and dipentaerythritol penta(meth)acrylate.

Examples of the hexafunctional monomer include dipentaerythritol hexa(meth)acrylate, EO-modified dipentaerythritol penta(meth)acrylate, and alkylene oxide-modified hexa(meth)acrylate of phosphazene.

When the ink of the present invention contains the other polymerizable compound other than the compound represented by the above general formula (C) and the oligomer, as listed above, the content thereof is preferably 5 to 60% by mass, and particularly preferably 10 to 50% by mass, in the total amount of the ink.

In one embodiment, the polymerizable compound configuring the ink of the present invention preferably contains a polymerizable compound having a propylene oxide group (PO group), in addition to the polymerizable compound (A). In general, an ink containing a certain amount of a polymerizable compound having a propylene oxide group has improved curability and discharge stability. The propylene oxide (PO) group has a structure similar to that of an ethylene oxide (EO) group, but has strong hydrophobicity unlike the EO group. Therefore, it is preferable to control the content of the polymerizable compound having a PO group. Specifically, it is preferable to adjust a ratio of the content of the polymerizable compound (A) to the content of the polymerizable compound having a PO group. When the ratio is appropriately adjusted, it is considered that orientation of EO-TPO and the uniformization of the acylphosphine oxide-type photopolymerization initiator having a large number of aromatic rings in a molecular structure are prevented from being inhibited by the polymerizable compound having a PO group, and an ink having particularly excellent internal curability, surface curability, and strength of a printed matter can easily be obtained, while discharge stability is maintained in a suitable state.

From such viewpoint, the ratio of the content of the polymerizable compound (A) to the content of the polymerizable compound having a PO group is preferably 0.1 to 2.2, more preferably 0.3 to 1.6, and particularly preferably 0.6 to 1.3.

For the same reason, in the ink of the present invention, the ratio of the content of EO-TPO to the content of the polymerizable compound having a PO group is preferably 0.05 to 0.8, more preferably 0.08 to 0.65, and particularly preferably 0.1 to 0.4.

In one embodiment, the polymerizable compound having a PO group that can be preferably used in combination with the polymerizable compound (A) as the polymerizable compound may be either a monofunctional monomer or a polyfunctional monomer, each of which is a (meth)acrylate having a PO group as a substituent for a main chain. In another embodiment, the polymerizable compound may be either a monofunctional monomer or a polyfunctional monomer, each of which is a (PO-modified) (meth)acrylate where a PO group is incorporated in the main chain.

Specific examples thereof include PO-modified (propoxylated) 2-phenoxyethyl (meth)acrylate, methoxydipropylene glycol (meth)acrylate, PO-modified (propoxylated) neopentyl glycol diacrylate, dipropylene glycol di(meth)acrylate, tripropylene glycol di(meth)acrylate, propoxylated ethoxylated bisphenol A di(meth)acrylate, propoxylated bisphenol A di(meth)acrylate, propoxylated dipentaerythritol tri(meth)acrylate, PO-modified (propoxylated) trimethylolpropane tri(meth)acrylate, propoxylated glyceryl tri(meth)acrylate, and propoxylated dipentaerythritol tetra(meth)acrylate.

Among these monomers, one or more compounds selected from the group consisting of dipropylene glycol di(meth)acrylate, tripropylene glycol di(meth)acrylate, and PO-modified (propoxylated) trimethylolpropane tri(meth)acrylate can be suitably used.

In one embodiment, the polymerizable compound configuring the ink of the present invention preferably contains the polymerizable compound having a PO group, in addition to the polymerizable compound (A). The content of the polymerizable compound having a PO group is preferably 5 to 75% by mass, more preferably 7 to 60% by mass, and still more preferably 9 to 52% by mass, in the total amount of the ink.

In another embodiment, the polymerizable compound configuring the ink of the present invention preferably contains 2-(2-vinyloxyethoxy) ethyl (meth)acrylate in addition to the polymerizable compound (A). The content of 2-(2-vinyloxyethoxy) ethyl (meth)acrylate is preferably 5 to 45% by mass, more preferably 8 to 38% by mass, and still more preferably 10 to 30% by mass, in the total amount of the ink.

In still another embodiment, the polymerizable compound configuring the ink of the present invention preferably contains the polymerizable compound having a PO group and 2-2-vinyloxyethoxy) ethyl (meth)acrylate, in addition to the polymerizable compound (A). The content (total amount) of the polymerizable compound having a PO group and 2-(2-vinyloxyethoxy) ethyl (meth)acrylate is preferably 10 to 80% by mass, more preferably 15 to 70% by mass, and still more preferably 20 to 60% by mass, in the total amount of the ink.

### <Photopolymerization initiator>

The ink of the present invention contains EO-TPO and an acylphosphine oxide-type photopolymerization initiator (B) other than the EO-TPO, as a photopolymerization initiator. As described above, by using the photopolymerization initiator (B), EO-TPO, and the polymerizable compound (A) in combination, it is possible to achieve both internal curability and surface curability, and furthermore, discharge stability of the ink is improved.

Note that the "ethoxyphenyl (2,4,6-trimethylbenzoyl) phosphine oxide" in the present application also includes a multimeric ethoxyphenyl (2,4,6-trimethylbenzoyl) phosphine oxide (hereinafter, also referred to as "EO-TPO multimer" in the present description).

A commercially available product can be used for EO-TPO, and specific examples thereof include "Omnirad TPO-L" and "OMNIPOL TP" manufactured by IGM RESINS, "Speedcure TPO-L" manufactured by Lambson Ltd., and "GR-TPO-L" manufactured by Hubei Gurun Technology Co., Ltd. Note that OMNIPOL TP is an EO-TPO multimer.

Further, examples of the photopolymerization initiator (B) include "Omnirad TPO" and "Omnirad 819" manufactured by IGM RESINS. In addition, acylphosphine oxide-type photopolymerization initiators described in WO 2017/086224 A and WO 2020/049378 A, and lithium phenyl (2,4,6-trimethylbenzoyl) phosphinate can also be used. Note that these photopolymerization initiators (B) may be used singly or in combination of two or more types thereof.

The blending amount of EO-TPO is preferably 1 to 14% by mass, more preferably 2 to 12% by mass, and particularly preferably 4 to 10% by mass in the ink of the present invention. When the blending amount of EO-TPO is within the above ranges, it is possible to achieve all of internal curability, surface curability, and strength of a printed matter.

For the same reason to that in the case of the blending amount of EO-TPO, the blending amount of the photopolymerization initiator (B) is preferably 1 to 12% by mass, more preferably 2 to 11% by mass, and particularly preferably 4 to 10% by mass, in the ink of the present invention.

Furthermore, the total amount of the content of EO-TPO and the content of the photopolymerization initiator (B) is preferably 8 to 20% by mass, and particularly preferably 8 to 14% by mass, in the ink of the present invention from the viewpoint that it is easy to obtain an ink particularly excellent in all of internal curability, surface curability, and strength of a printed matter.

In addition, the ratio of the blending amount of the EO-TPO to the blending amount of the photopolymerization initiator (B) is suitably 0.4 to 3.0 from the viewpoint of achieving all of internal curability, surface curability, and strength of a printed matter.

In the present invention, only two, EO-TPO and the photopolymerization initiator (B), may be used for the ink, or a photopolymerization initiator (hereinafter, also referred to as "other photopolymerization initiator") other than these may be further used in combination in order to further improve curability and flexibility of the coating film.

Specific examples of the other photopolymerization initiator include a benzophenone-type photopolymerization initiator, a thioxanthone-type photopolymerization initiator, a hydroxyacetophenone-type photopolymerization initiator, an alkylaminoacetophenone-type photopolymerization initiator, and an oxime ester-type photopolymerization initiator. Note that only one of these other photopolymerization initiators listed above may be used, or two or more of the other photopolymerization initiators listed above may be used in combination.

As the benzophenone-type photopolymerization initiator, a commercially available product can be used, and examples thereof include "Omnirad BP", "Omnirad BMS", "Omnirad 4PBZ", "OMNIRAD EMK", and "Esacure 1001M" manufactured by IGM RESINS, and "GENOPOL BP-1" and "GENOPOL BP-2" manufactured by Rahn

### AG.

Examples of a commercially available product of the thioxanthone-type photopolymerization initiator include "Omnirad ITX","Omnirad DETX", "Omnipol TX", and "Omnipol BL 728" (note that the Omnipol BL 728 is a mixture of polymeric photopolymerization initiators containing Omnipol TX as a main component) manufactured by IGM RESINS.

Examples of a commercially available product of the hydroxyacetophenone-type initiator include "Omnirad 127", "Omnirad 184", "Omnirad 1173","Omnirad 2959", "Esacure KIP150", "Esacure KIP160", and "Esacure ONE" manufactured by IGM

### RESINS.

Examples of a commercially available product of the alkylaminoacetophenone-type initiator include "Omnirad 907", "Omnirad 369", and "Omnirad 379" manufactured by IGM RESINS.

Examples of a commercially available product of the oxime ester-type initiator include "IRGACURE OXE01", "IRGACURE OXE02", and "IRGACURE OXE04" manufactured by BASF.

In addition to those listed above, as the other photopolymerization initiator, for example, "Omnirad 651" and "Omnirad MBF" manufactured by IGM RESINS can be used.

Among these photopolymerization initiators, as the other photopolymerization initiator, one or more selected from the group consisting of a hydroxyacetophenone-type initiator, an alkylaminoacetophenone-type initiator, a benzophenone-type photopolymerization initiator, and a thioxanthone-type photopolymerization initiator can be preferably used, and a benzophenone-type photopolymerization initiator and/or a thioxanthone-type photopolymerization initiator can be particularly preferably used from the viewpoint of achieving both surface curability and internal curability.

When a benzophenone-type photopolymerization initiator is used as the other photopolymerization initiator, the blending amount thereof is preferably 0.5 to 4% by mass, and particularly preferably 1 to 3% by mass, with respect to the total amount of the ink of the present invention. When a thioxanthone-type photopolymerization initiator is used as the other photopolymerization initiator, the blending amount thereof is preferably 0.1 to 4% by mass, and particularly preferably 0.2 to 2% by mass, with respect to the total amount of the ink of the present invention. By setting the blending amounts of the benzophenone-type photopolymerization initiator and the thioxanthone-type photopolymerization initiator within the above ranges, surface curability and internal curability of the ink of the present invention are both particularly excellent while maintaining a suitable balance.

### <Colorant>

The ink of the present invention contains a colorant. As the colorant, conventionally known dyes and pigments can be used, but in the present invention, it is suitable to use a pigment from the viewpoint of improving color developability (opacifying property in the case of a white ink, and glittering property in the case of a metallic ink) of a printed matter, and storage stability and discharge stability of the ink.

The pigment is not particularly limited, but for example, an organic pigment or an inorganic pigment represented by the following color index name can be used. For example, any one of C.I. Pigment Red 5, 7, 12, 17, 48 (Ca), 48 (Mn), 49:2, 57 (Ca), 57:1, 112, 122, 123, 147, 149, 150, 166, 168, 176, 177, 178, 184, 188, 202, 209, 242, 255, 264, 266, 269, 282, or the like as a red pigment; C.I. Pigment Violet 19 or the like as a violet pigment; C.I. Pigment Orange 5, 13, 34, 38, 43, 61, 62, 64, or the like as an orange pigment; C.I. Pigment Blue 1, 2, 3, 15:3, 15:4, 15:34, 16, 22, 60, C.I. Vat Blue 4, 60, or the like as a blue pigment; C.I. Pigment Green 7, 26, 36, 50, 58, or the like as a green pigment; C.I. Pigment Yellow 1, 2, 3, 12, 14, 16, 17, 73, 74, 75, 83, 93, 95, 97, 98, 109, 110, 114, 128, 129, 138, 139, 147, 150, 151, 154, 155, 180, 185, 213, or the like as a yellow pigment; C.I. Pigment Black 1, 7, or the like as a black pigment; C.I. Pigment White 6, 18, 21, or the like as a white pigment; and C.I. Pigment Metal 1, 2, or the like as a metallic pigment can be used according to the desired color reproducibility and color developability. Note that two or more of the pigments listed above may be used in combination.

An average particle size (D50) of the pigment is preferably 50 to 500 nm, and more preferably 100 to 400 nm. When D50 is within these ranges, color developability, opacifying property or glittering property, and storage stability and discharge stability of the ink are excellent. Furthermore, it is also possible to prevent deterioration of surface curability and internal curability. Note that the above D50 represents a volume-based median diameter, and can be measured using a dynamic light scattering type particle size distribution measuring apparatus (for example, "Nanotrac UPA-EX150" manufactured by MicrotracBEL Corp.) after the ink is diluted 200 to 1000 times with ethyl acetate or the like.

The content of the pigment in the ink is appropriately selected depending on the color and intended use of the ink, and is preferably, for example, 0.1 to 30% by mass with respect to the total amount of the ink. In addition, the content of the pigment is more preferably 0.5 to 15% by mass, and still more preferably 1 to 10% by mass, except for cases of a white ink and a metallic ink from the viewpoint of color developability, opacifying property or glittering property, and storage stability and discharge stability of the ink. On the other hand, in a case of a white ink, the content of the pigment is more preferably 5 to 30% by mass, and still more preferably 15 to 25% by mass. In a case of a metallic ink, the content of the pigment is more preferably 0.5 to 10% by mass, and still more preferably 1 to 5% by mass.

Note that the ink of the present invention can also be an ink of a light color (for example, light yellow, light magenta, light cyan, or light black) having a low pigment content according to the required application and image quality. In this case, the pigments listed above can be used as colorants for light-color inks.

### <Pigment dispersing resin>

When the ink of the present invention contains a pigment, a pigment dispersing resin can be used in order to improve initial dispersibility and storage stability of the pigment, and discharge stability of the ink. As the pigment dispersing resin, a commercially available product can be used, or a product synthesized by a conventionally known method can also be used. Specific examples of the commercially available product include "AJISPER PB-821" and "AJISPER-PB-822" manufactured by Ajinomoto Fine-Techno Co., Inc., "BYKJET-9150", "BYKJET-9151", and "BYKJET-9152" manufactured by BYK Japan KK, and "SOLSPERSE 32000", "SOLSPERSE 39000", "SOLSPERSE J180", and "SOLSPERSE J200" manufactured by Lubrizol Corporation. In addition, for example, a resin obtained by copolymerizing: an acid group-containing polymerizable compound such as acrylic acid or methacrylic acid; an amino group-containing polymerizable compound such as acrylamide, dimethylaminoethyl methacrylate, or diethylaminoethyl methacrylate; and any one of the above-listed polymerizable compounds that can be used in the ink of the present invention may be used as the pigment dispersing resin.

A weight average molecular weight of the pigment dispersing resin is preferably 5,000 to 100,000, more preferably 10,000 to 50,000, and still more preferably 15,000 to 30,000. When the weight average molecular weight is within the above ranges, compatibility of the pigment dispersing resin with the polymerizable compound is favorable, and storage stability and discharge stability of the ink are improved. In addition, a decrease in glossiness of a printed matter due to the pigment dispersing resin is prevented, and color developability, opacifying property, or glittering property is improved.

Note that a method for measuring the weight average molecular weight is the same to that in the case of the oligomer described above.

The addition amount of the pigment dispersing resin is preferably 20 to 120% by mass, and more preferably 30 to 80% by mass, with respect to the total amount of the pigment, except for the case of a white ink. In the case of the white ink, the addition amount of the pigment dispersing resin is preferably 1 to 100% by mass, and more preferably 3 to 50% by mass with respect to the total amount of the pigment. By using the pigment dispersing resin in the above blending amount ranges, a pigment dispersion excellent in initial pigment dispersibility and storage stability can be obtained.

### <Other components>

In the ink of the present invention, in addition to the above components, a polymerization inhibitor, a surface additive, an organic solvent, water, and other additives can be used in combination.

### (Polymerization Inhibitor)

A polymerization inhibitor can be used for the ink of the present invention from the viewpoint of enhancing storage stability over time to improve discharge stability, adjusting the balance between surface curability and internal curability, and furthermore, preventing the curing wrinkles and curling over time of a printed matter. As the polymerization inhibitor, a hindered phenol-type compound, a phenol-type compound, a hydroquinone-type compound, a phenothiazine-type compound, a phosphorus-type compound, and a nitrosophenylhydroxylamine-type compound are suitably used. Specific examples thereof include 4-methoxyphenol, t-butylhydroquinone, 2,6-di-t-butyl-4-methylphenol, pentaerythritol tetrakis[3-(3,5-di-t-butyl-4-hydroxyphenyl) propionate], hydroquinone, methylhydroquinone, phenothiazine, dicumylphenothiazine, triphenylphosphine, and an aluminum salt of N-nitrosophenylhydroxylamine. The content of the polymerization inhibitor is preferably 0.01 to 2% by mass, and more preferably 0.1 to 1% by mass, with respect to the total amount of the ink of the present invention from the viewpoint that the effect of the polymerization inhibitor can be suitably exhibited.

### (Surface additive)

It is preferable to add a surface additive to the ink of the present invention for the purposes of improving discharge stability, enhancing wet-spreadability to a substrate, improving adhesion, and preventing cissing. As the surface additive, for example, a silicone-type surface additive, a fluorine-type surface additive, an acrylic surface additive, and an acetylene glycol-type surface additive can be used. Among these surface additives, it is preferable to use a silicone-type surface additive, and it is particularly preferable to use a polyether-modified silicone-type surface additive from the viewpoints of improving discharge stability, lowering ability of surface tension, improving adhesion, and compatibility with the polymerizable compound.

When a silicone-type surface additive is used, the content thereof is preferably 0.1 to 5.0% by mass in the ink. By setting the content to 0.1% by mass or more, wet-spreadability to a substrate can be easily improved, and adhesion is also improved. On the other hand, by setting the content to 5.0% by mass or less, it is easy to ensure storage stability and discharge stability of the ink.

### (Organic solvent and water)

In the ink of the present invention, an organic solvent and/or water may be used for improving discharge stability, reducing the viscosity of the ink, and improving wet-spreadability and adhesion to a substrate. When the ink contains an organic solvent and/or water, the content thereof is preferably 0.01 to 30% by mass, more preferably 0.05 to 20% by mass, and still more preferably 0.1 to 10% by mass, in the total amount of the ink. In addition, when an organic solvent is used, it is preferable to use an organic solvent having a boiling point of 140 to 300°C from the viewpoint of discharge stability, drying property, and wet-spreadability and adhesiveness to a substrate.

As the organic solvent, for example, alkylene glycol monoalkyl ether acetates, alkylene glycol diacetates, alkylene glycol monoalkyl ethers, alkylene glycol dialkyl ethers, alkanediols, lactams, lactones, other nitrogen-containing solvents, and other oxygen-containing solvents can be used.

From the viewpoint of suitably exhibiting the above-described effect by using an organic solvent, among these organic solvents, it is preferable to contain at least one selected from the group consisting of alkylene glycol monoalkyl ethers, alkylene glycol dialkyl ethers, and alkylene glycol monoalkyl ether acetates. Tripropylene glycol monomethyl ether, dipropylene glycol monomethyl ether, propylene glycol monomethyl ether, ethylene glycol monobutyl ether, diethylene glycol monobutyl ether, triethylene glycol monobutyl ether, tetraethylene glycol dialkyl ether, ethylene glycol monobutyl ether acetate, and diethylene glycol diethyl ether are preferable, and it is particularly preferable to contain at least one selected from tetraethylene glycol dialkyl ether, ethylene glycol monobutyl ether acetate, and diethylene glycol diethyl ether.

### (Other components)

In the ink of the present invention, an ultraviolet absorber, a discoloration inhibitor, other high molecular compounds, and the like may be used as necessary in addition to the above-described components. As these components, conventionally known components can be optionally used.

### <Method for manufacturing ink>

The ink of the present invention can be manufactured by a conventionally known method. For example, the ink can be manufactured as follows, but the method for manufacturing the ink is not limited to the following. First, a colorant, a polymerizable compound (partially used in preparation of the ink described later), and as necessary, a pigment dispersing resin, a surface additive, a polymerization inhibitor, an organic solvent and/or water, and the like are mixed, and then the mixture is dispersed using a paint shaker, a sand mill, a roll mill, a media-less dispersing apparatus, or the like to prepare a colorant dispersion.

Next, to the obtained colorant dispersion, the rest of the polymerizable compound, a photopolymerization initiator containing EO-TPO and the photopolymerization initiator (B), and as necessary, a surface additive, a polymerization inhibitor, an organic solvent and/or water, and the like are added, mixed well, and then filtered with a filter or the like to filter out coarse particles, thereby obtaining an ink.

When the colorant dispersion is manufactured, the colorant dispersion contains a colorant in an amount of preferably 3 to 50% by mass, more preferably 5 to 40% by mass, particularly preferably 10 to 30% by mass.

Furthermore, it is preferable to use a bifunctional monomer as the polymerizable compound used for manufacturing the colorant dispersion. The bifunctional monomer may be the polymerizable compound (A). Also, the bifunctional monomer is preferably the polymerizable compound (A) or a monomer having an EO chain or a PO chain as a main skeleton from the viewpoint of storage stability, viscosity, and discharge stability of the colorant dispersion and an ink manufactured using the colorant dispersion. In particular, it is preferable to contain at least one selected from the group consisting of dipropylene glycol diacrylate and 1,6-hexanediol diacrylate from the viewpoint of storage stability and discharge stability.

### <Method for manufacturing printed matter>

One embodiment of the present invention relates to a method for manufacturing a printed matter using the ink of the present invention. Examples of the method for manufacturing a printed matter include a method including a step of discharging the ink onto a substrate (step 1) and a step of irradiating the substrate including the discharged ink with an ultraviolet ray from an ultraviolet ray irradiation means (step 2).

Note that, in the present invention, a method for discharging and applying the same ink from the same inkjet head to the same place on a substrate for a plurality of times, that is, a method for applying the above step 1 a plurality of times to the same place on the substrate (multi-pass printing method) may be adopted. However, from the viewpoint that the above-described effect of the present invention is sufficiently exhibited, in the case of the present invention, it is preferable to adopt a method for discharging and applying the same ink from the same inkjet head to the same place on a substrate only once, that is, a method for applying the step 1 to the same place on the substrate only once (one pass printing method).

The one-pass printing method can be performed by using, for example, a line printer. A printing speed at this time is preferably 20 to 150 m/min, and particularly preferably 30 to 100 m/min from a viewpoint of obtaining a printed layer having productivity and favorable quality.

### <Substrate>

As the substrate used in the method for manufacturing a printed matter using the ink of the present invention, a resin film substrate or a paper substrate can be preferably used. As the resin film substrate, a substrate having a thickness of 10 to 90 µm and containing a material selected from the group consisting of polypropylene, polyethylene, polyethylene terephthalate, and nylon is preferably selected. Meanwhile, as the paper substrate, standard coated paper, art paper, laminated paper, and the like are preferably selected. The ink of the present invention is suitably used for printing of packages formed by the substrates listed above, and is particularly suitable for printing of the packages for food packaging.

The "substrate containing a material selected from the group consisting of polypropylene, polyethylene, polyethylene terephthalate, and nylon" also includes a resin film substrate (laminated film substrate) having a multilayer structure and having at least one layer made of a material selected from the group consisting of polyethylene terephthalate, polyethylene, polypropylene, and nylon. In addition, for the purpose of improving strength, blocking oxygen, and the like, of a package, a layer including an AL (aluminum foil), a VM (vacuum vapor-deposited) film (aluminum vapor-deposited film, transparent vapor-deposited film, or the like), or the like may be present in layers configuring the laminated film.

### <Ink discharge means>

The ink of the present invention can be suitably used for inkjet recording. Therefore, an inkjet head is used in the ink discharging step in step 1.

A drop volume of the ink of the present invention discharged from the inkjet head is preferably 2 pl or more and 50 pl or less, and more preferably 3 pl or more and 20 pl or less. A design resolution of the inkjet head is preferably 600 dpi or more. Specific examples of the inkjet head satisfying the above conditions include KJ4A-AA, KJ4A-TA, and KJ4A-RH manufactured by KYOCERA Corporation, Samba G3L manufactured by FUJIFILM Corporation, S3200, S1600, S800, I3200, and I1600 manufactured by Seiko Epson Corporation, KM1024i and KM1024 manufactured by KONICA MINOLTA, Inc., and MH5320, MH5340, MH5240, and MH5440 manufactured by Ricoh Co., Ltd., all of which are suitably used.

In addition, the ink of the present invention can be discharged while being heated by a heating device, such as a heater, included in the inkjet head such that the ink has an appropriate viscosity. The ink is preferably heated such that the viscosity of the ink at the time of discharge is 20 mPa•s or less, and the ink is more preferably heated such that the viscosity of the ink at the time of discharge is 15 mPa•s or less from the viewpoint of stably discharging the ink continuously.

### <Ultraviolet ray irradiation means>

An ultraviolet ray irradiation means that can be used in the step 2 is, for example, a high pressure mercury lamp, an ultra-high pressure mercury lamp, a metal halide lamp, an excimer laser lamp, a xenon lamp, an ultraviolet light-emitting diode (UV-LED), or the like.

### <Ultraviolet light-emitting diode>

Among the ultraviolet ray irradiation means, the UV-LED has characteristics such as a narrow wavelength of the emitted ultraviolet ray and easy miniaturization of the means. Therefore, an irradiation wavelength and method of using the UV-LED can be freely adjusted to some extent according to characteristics of the photopolymerization initiator and the colorant contained in the ink. The peak wavelength of the UV-LED used in step 2 is preferably 280 to 420 nm, more preferably 320 to 410 nm, and particularly preferably 340 to 400 nm.

In addition, due to their small size, a plurality of UV-LEDs can be installed side by side. Therefore, the plurality of LEDs can be used by installing them side by side to increase irradiation strength to a substrate for use. Note that, in such a case, a plurality of UV-LEDs having different peak wavelengths may be used by installing them side by side for use. In addition, in step 2, an ultraviolet ray irradiation means other than the UV-LED, such as an ultraviolet lamp described later, may be used in combination with the UV-LED.

### <Ultraviolet lamp>

When an ultraviolet ray irradiation means (ultraviolet lamp) other than the UV-LED is used for the ultraviolet ray irradiation means, a metal halide lamp is preferably used from the viewpoint that an ultraviolet ray in a UV-A region can be efficiently emitted and the irradiation light can sufficiently reach the inside of an ink film. Note that the metal halide lamp can also be used in combination with the UV-LED described above.

In step 2, a maximum illuminance intensity of an ultraviolet ray on a substrate is preferably 2 W/cm² or more, and more preferably 3 mW/cm² or more. In addition, an integrated light amount when irradiating the substrate varies depending on the types and contents of a colorant, a polymerizable compound, and a photopolymerization initiator contained in the ink, but is preferably 100 mJ/cm² or more, more preferably 150 mJ/cm² or more, and still more preferably 200 mJ/cm² or more.

Furthermore, the time from the end of the step 1 to the start of step 2 (the time until irradiation with an ultraviolet ray is started after the ink imparts onto the substrate) is preferably 0.03 to 3 seconds, more preferably 0.04 to 2.5 seconds, and still more preferably 0.06 to 2 seconds. As a result, by irradiating the ink of the present invention, which has an excellent balance between surface curability and internal curability, with an ultraviolet ray under the above conditions, dot formability of the ink is favorable, and a printed matter having favorable quality with no mixing among the inks, can be obtained.

### <Ink set>

In one embodiment of the present invention, a plurality of inks having different colors may be prepared and used as an ink set. Note that all the inks configuring the ink set preferably satisfy the above-described requirements for the ink of the present invention.

When a printed matter is manufactured using the ink set, the step 1 may be performed by the number of inks configuring the ink set, and then the step 2 may be performed. Alternatively, step 1 may be continuously performed on some of the inks configuring the ink set, and then step 2 may be performed afterwards, and further, step 1 and step 2 may continuously be performed with the remaining (undischarged) inks. However, in the method for manufacturing a printed matter according to one embodiment of the present invention, it is preferable to perform step 2 every time step 1 is performed, from the viewpoint of maximizing the above-described characteristic of the ink of the present invention, that is, the ink having excellent balance between surface curability and internal curability.

### <Pre-curing>

The phrase "the step 2 is performed every time the step 1 is performed" refers to partially curing the ink on the substrate by irradiating the ink with an ultraviolet ray from the ultraviolet ray irradiation means after the ink impacts on the substrate and before the next ink impacts on the substrate, and this is generally called "pre-curing". When pre-curing is performed in the present invention, the ultraviolet ray irradiation means used for the temporary curing is preferably a UV-LED. In the temporary curing, a maximum illuminance of an ultraviolet ray on the substrate is preferably 2 to 20 W/cm², and more preferably 5 to 15 W/cm².

### <Main curing>

On the other hand, in contrast with the above-described pre-curing, step 2 performed to completely cure the ink on the substrate after all the inks configuring the ink set are discharged onto the substrate is generally called "main curing". That is, when step 2 is performed a plurality of times in manufacturing a printed matter using the ink set, the last performed step 2 is not a pre-curing step but a main curing step. The main curing can be performed at the maximum illuminance of 2 W/cm² or more and the integrated light amount of 100 mJ/cm² or more, described above.

### Examples

Hereinafter, the present invention will be described in more detail, but the following Examples do not limit the scope of rights of the present invention. Moreover, unless otherwise specified, "part" represents part by mass, and "%" represents % by mass.

### <1> Manufacture of inks 1 to 67

Prior to preparation of an ink, a black pigment dispersion was prepared. A black pigment dispersion was prepared by stirring and mixing 20 parts of a pigment ("Special Black 350" manufactured by Orion Engineered Carbons S.A.), 10 parts of a pigment dispersing resin ("SOLSPERSE 32000" manufactured by Lubrizol Corporation), and 70 parts of dipropylene glycol diacrylate (DPGDA, "Miramer M222" manufactured by Miwon Specialty Chemical Co., Ltd.) with a high speed mixer until the mixture became uniform, and then dispersing the mixture in a horizontal sand mill for about one hour.

Next, to have a blend described in Table 1 below, a polymerizable compound, a photopolymerization initiator, and a surface additive were sequentially added to the black pigment dispersion prepared above while stirring, and the mixture was gently mixed until the photopolymerization initiator was dissolved. Then, the mixture was filtered with a membrane filter having a pore size of 1 µm to remove coarse particles, thereby obtaining a black ink. Note that the raw materials may be added in any order.

**[Table 1-1]**

| | | | | | Example | | | | | | | | | | | | | | |
|---|---|---|---|---|---|---|---|---|---|---|---|---|---|---|---|---|---|---|---|
| | | | | | 1 | 2 | 3 | 4 | 5 | 6 | 7 | 8 | 9 | 10 | 11 | 12 | 13 | 14 | 15 |
| Ink No. | | | | | 1 | 2 | 3 | 4 | 5 | 6 | 7 | 8 | 9 | 10 | 11 | 12 | 13 | 14 | 15 |
| Blending amount | Black pigment dispersion | | | | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| | Polymerizable compound | Polyfunctional monomer | Polymerizable compound (A) | Viscoat #195 | | | | | | | | | | | 30.0 | | | | |
| | | | | Viscoat #230 | 10.0 | 10.0 | 15.0 | 15.0 | 22.5 | 30.0 | 35.0 | 39.0 | 45.0 | 47.5 | | | | | |
| | | | | Viscoat #260 | | | | | | | | | | | | 30.0 | | | |
| | | | | CD595 | | | | | | | | | | | | | 30.0 | | |
| | | | | SR341 | | | | | | | | | | | | | | 30.0 | |
| | | | Compound represented by general formula (C) | Photomer 4050 | | | | | | | | | | | | | | | |
| | | | | Photomer 4054 | | | | | | | | | | | | | | | |
| | | | Polymerizable compound having a propylene oxide group | Miramer M222 | 44.5 | 19.0 | 34.5 | 31.0 | 22.5 | 24.5 | 13.0 | 16.0 | 14.5 | 7.0 | 32.0 | 22.0 | 14.5 | 19.5 | 59.5 |
| | | | | SR9003 | | | | | | | | | | | | | | | |
| | | | VEEA | | 15.0 | 40.5 | 20.0 | 23.0 | 24.5 | 15.0 | 21.5 | 14.5 | 10.0 | 15.0 | 7.5 | 17.5 | 25.0 | 20.0 | |
| | | | Aronix M-350 | | | | | | | | | | | | | | | | |
| | | Monofunctional monomer | Polymerizable compound (A) | IBA | | | | | | | | | | | | | | | 10.0 |
| | | | | INNA | | | | | | | | | | | | | | | |
| | | | | LA | | | | | | | | | | | | | | | |
| | | | Viscoat 192 | | | | | | | | | | | | | | | | |
| | | | Viscoat 160 | | | | | | | | | | | | | | | | |
| | | | IBXA | | | | | | | | | | | | | | | | |
| | | | NVC | | | | | | | | | | | | | | | | |
| | | | 4-HBA | | | | | | | | | | | | | | | | |
| | | Oligomer | Ebecryl LEO 10552 | | | | | | | | | | | | | | | | |
| | | | CN371 | | | | | | | | | | | | | | | | |
| | Photopolymerization Initiator | Acylphosphine oxide-type initiator | EO-TPO | Omnirad TPO-L | 4.0 | 4.0 | 4.0 | 4.5 | 4.0 | 4.0 | 4.0 | 4.0 | 4.0 | 4.0 | 4.0 | 4.0 | 4.0 | 4.0 | 4.0 |
| | | | | Omnipol TP | | | | | | | | | | | | | | | |
| | | | Photopolymerization initiator (B) | Omnirad TPO | | | | | | | | | | | | | | | |
| | | | | Omnirad 819 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | Other photopolymerizati on initiators | Benzophenone-type | Omnirad BMS | 2.0 | 2.0 | 2.0 | 2.0 | 2.0 | 2.0 | 2.0 | 2.0 | 2.0 | 2.0 | 2.0 | 2.0 | 2.0 | 2.0 | 2.0 |
| | | | | ESACURE 1001M | | | | | | | | | | | | | | | |
| | | | Thioxanthone-type | Omnipol BL 728 | | | | | | | | | | | | | | | |
| | | | | Omnirad DETX | | | | | | | | | | | | | | | |
| | | | Hydroxyacetophenone-type | ESACURE ONE | | | | | | | | | | | | | | | |
| | | | | ESACURE KIP160 | | | | | | | | | | | | | | | |
| | | | Alkylaminoacetophenone-type | Omnird 379 | | | | | | | | | | | | | | | |
| | Surface additive | Silicone-type | TEGO GLIDE 432 | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | BYK-331 | | | | | | | | | | | | | | | | |
| | | | BYK-UV 3510 | | | | | | | | | | | | | | | | |
| | | | TEGORAD 2300 | | | | | | | | | | | | | | | | |
| | | Acrylic | BYK-350 | | | | | | | | | | | | | | | | |
| | Others | | | | | | | | | | | | | | | | | | |
| | Total amount | | | | 100 | 100 | 100 | 100 | 100 | 100 | 100 | 100 | 100 | 100 | 100 | 100 | 100 | 100 | 100 |
| Specifications | | Amount of polyfunctional polymerizable compound (in total amount of polymerizable compound) | | | 100% | 100% | 100% | 100% | 100% | 100% | 100% | 100% | 100% | 100% | 100% | 100% | 100% | 100% | 88.0% |
| | | Amount of polymerizable compound (A) (in total ink) | | | 10.0% | 10.0% | 15.0% | 15.0% | 22.5% | 30.0% | 35.0% | 39.0% | 45.0% | 47.5% | 30.0% | 30.0% | 30.0% | 30.0% | 10.0% |
| | | Amount of polymerizable compound (A) (in total ink) | | | 10.0% | 10.0% | 15.0% | 15.0% | 22.5% | 30.0% | 35.0% | 39.0% | 45.0% | 47.5% | 30.0% | 30.0% | 30.0% | 30.0% | 10.0% |
| | | Ratio of amount of polymerizable compound (A)/amount of EO-TPO | | | 2.50 | 2.50 | 3.75 | 3.33 | 5.63 | 7.50 | 8.75 | 9.75 | 11.25 | 11.88 | 7.50 | 7.50 | 7.50 | 7.50 | 2.50 |
| | | Amount of PO group-containing monomer (in total ink) | | | 58.5% | 33.0% | 48.5% | 45.0% | 36.5% | 38.5% | 27.0% | 30.0% | 28.5% | 21.0% | 46.0% | 36.0% | 28.5% | 33.5% | 73.5% |
| | | Ratio of amount of polymerizable compound (A)/amount of PO group-containing monomer | | | 0.17 | 0.30 | 0.31 | 0.33 | 0.62 | 0.78 | 1.30 | 1.30 | 1.58 | 2.26 | 0.65 | 0.83 | 1.05 | 0.90 | 0.14 |
| | | Ratio of amount of EO-TPO/amount of PO group-containing monomer | | | 0.07 | 0.12 | 0.08 | 0.10 | 0.11 | 0.10 | 0.15 | 0.13 | 0.14 | 0.19 | 0.09 | 0.11 | 0.14 | 0.12 | 0.05 |
| | | Amount of EO-TPO+ photopolymerization initiator (B) (in total ink) | | | 8.0% | 8.0% | 8.0% | 8.5% | 8.0% | 8.0% | 8.0% | 8.0% | 8.0% | 8.0% | 8.0% | 8.0% | 8.0% | 8.0% | 8.0% |
| Evaluation results | | Thin film surface curability | | | 2 | 3 | 3 | 3 | 4 | 4 | 4 | 4 | 4 | 4 | 3 | 4 | 4 | 4 | 2 |
| | | Thick film internal curability | | | 2 | 3 | 4 | 4 | 4 | 4 | 4 | 4 | 4 | 2 | 4 | 3 | 3 | 4 | 3 |
| | | Ink film strength | | | 3 | 3 | 3 | 4 | 4 | 4 | 4 | 4 | 4 | 3 | 4 | 4 | 4 | 4 | 2 |
| | | Discharge stability | | | 3 | 3 | 4 | 4 | 4 | 4 | 4 | 4 | 3 | 3 | 4 | 4 | 3 | 4 | 3 |

**[Table 1-2]**

| | | | | | Example | | | | | | | | | | | | | | |
|---|---|---|---|---|---|---|---|---|---|---|---|---|---|---|---|---|---|---|---|
| | | | | | 16 | 17 | 18 | 19 | 20 | 21 | 22 | 23 | 24 | 25 | 26 | 27 | 28 | 29 | 30 |
| Ink No. | | | | | 16 | 17 | 18 | 19 | 20 | 21 | 22 | 23 | 24 | 25 | 26 | 27 | 28 | 29 | 30 |
| Blending amount | Black pigment dispersion | | | | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| | Polymerizable compound | Polyfunctional monomer | Polymerizable compound (A) | Viscoat #195 | | | | | | | | | | | | | | | |
| | | | | Viscoat #230 | | | | 22.0 | 14.0 | 6.0 | 30.0 | 30.0 | 20.0 | 30.0 | 30.0 | 30.0 | 30.0 | 30.0 | 30.0 |
| | | | | Viscoat #260 | | | | | | | | | | | | | | | |
| | | | | CD595 | | | | | | | | | | | | | | | |
| | | | | SR341 | | | | | | | | | | | | | | | |
| | | | Compound represented by general formula (C) | Photomer 4050 | | | | | | | | 10.0 | | | | | | | |
| | | | | Photomer 4054 | | | | | | | | | 10.0 | | | | | | |
| | | | Polymerizable compound having a propylene oxide group | Miramer M222 | 59.5 | 59.5 | 44.5 | 24.5 | 24.5 | 24.5 | 29.5 | | | | | | 10.5 | 10.5 | 31.5 |
| | | | | SR9003 | | | | | | | | | | | | | | | |
| | | | VEEA | | | | | 15.0 | 15.0 | 15.0 | | 29.5 | 39.5 | 11.5 | 11.5 | 11.5 | 25.0 | 25.0 | 10.0 |
| | | | Aronix M-350 | | | | | | | | | | | | | | | | |
| | | Monofunctional monomer | Polymerizable compound (A) | IBA | | | 25.0 | | | | 10.0 | | | | | | | | |
| | | | | INNA | 10.0 | | | 8.0 | 16.0 | 24.0 | | | | | | | | | |
| | | | | LA | | 10.0 | | | | | | | | | | | | | |
| | | | Viscoat 192 | | | | | | | | | | | 28.0 | | | | | |
| | | | Viscoat 160 | | | | | | | | | | | | 28.0 | | | | |
| | | | IBXA | | | | | | | | | | | | | 28.0 | | | |
| | | | NVC | | | | | | | | | | | | | | | | |
| | | | 4-HBA | | | | | | | | | | | | | | | | |
| | | Oligomer | Ebecryl LEO 10552 | | | | | | | | | | | | | | 4.0 | | |
| | | | CN371 | | | | | | | | | | | | | | | 4.0 | |
| | Photopolymerization Initiator | Acylphosphine oxide-type initiator | EO-TPO | Omnirad TPO-L | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | | | Omnipol TP | | | | | | | | | | | | | | | |
| | | | Photopolymerization initiator (B) | Omnirad TPO | | | | | | | | | | | | | | | |
| | | | | Omnirad 819 | 4.0 | 4.0 | 4.0 | 4.0 | 4.0 | 4.0 | 4.0 | 4.0 | 4.0 | 4.0 | 4.0 | 4.0 | 4.0 | 4.0 | 4.0 |
| | | Other photopolymerization initiators | Benzophenone-type | Omnirad BMS | 2.0 | 2.0 | 2.0 | 2.0 | 2.0 | 2.0 | 2.0 | 2.0 | 2.0 | 2.0 | 2.0 | 2.0 | 2.0 | 2.0 | |
| | | | | ESACURE 1001M | | | | | | | | | | | | | | | |
| | | | Thioxanthone-type | Omnipol BL 728 | | | | | | | | | | | | | | | |
| | | | | Omnirad DETX | | | | | | | | | | | | | | | |
| | | | Hydroxyacetophenone-type | ESACURE ONE | | | | | | | | | | | | | | | |
| | | | | ESACURE KIP160 | | | | | | | | | | | | | | | |
| | | | Alkylaminoacetophenone-type | Omnird 379 | | | | | | | | | | | | | | | |
| | Surface additive | Silicone-type | TEGO GLIDE 432 | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | BYK-331 | | | | | | | | | | | | | | | | |
| | | | BYK-UV 3510 | | | | | | | | | | | | | | | | |
| | | | TEGORAD 2300 | | | | | | | | | | | | | | | | |
| | | Acrylic | BYK-350 | | | | | | | | | | | | | | | | |
| | Others | | | | | | | | | | | | | | | | | | |
| | Total amount | | | | 100 | 100 | 100 | 100 | 100 | 100 | 100 | 100 | 100 | 100 | 100 | 100 | 100 | 100 | 100 |
| Specifications | | Amount of polyfunctional polymerizable compound (in total amount of polymerizable compound) | | | 88.0% | 88.0% | 70.1% | 90.4% | 80.8% | 71.3% | 88.0% | 100% | 100% | 66.5% | 66.5% | 66.5% | 100% | 100% | 100% |
| | | Amount of polymerizable compound (A) (in total ink) | | | 10.0% | 10.0% | 25.0% | 30.0% | 30.0% | 30.0% | 40.0% | 30.0% | 20.0% | 30.0% | 30.0% | 30.0% | 30.0% | 30.0% | 30.0% |
| | | Amount of polymerizable compound (A) (in total ink) | | | 10.0% | 10.0% | 25.0% | 30.0% | 30.0% | 30.0% | 40.0% | 30.0% | 20.0% | 30.0% | 30.0% | 30.0% | 30.0% | 30.0% | 30.0% |
| | | Ratio of amount of polymerizable compound (A)/amount of EO-TPO | | | 2.50 | 2.50 | 6.25 | 7.50 | 7.50 | 7.50 | 10.00 | 7.50 | 5.00 | 7.50 | 7.50 | 7.50 | 7.50 | 7.50 | 7.50 |
| | | Amount of PO group-containing monomer (in total ink) | | | 73.5% | 73.5% | 58.5% | 38.5% | 38.5% | 38.5% | 43.5% | 14.0% | 14.0% | 14.0% | 14.0% | 14.0% | 24.5% | 24.5% | 45.5% |
| | | Ratio of amount of polymerizable compound (A)/amount of PO group-containing monomer | | | 0.14 | 0.14 | 0.43 | 0.78 | 0.78 | 0.78 | 0.92 | 2.14 | 1.43 | 2.14 | 2.14 | 2.14 | 1.22 | 1.22 | 0.66 |
| | | Ratio of amount of EO-TPO/amount of PO group-containing monomer | | | 0.05 | 0.05 | 0.07 | 0.10 | 0.10 | 0.10 | 0.09 | 0.29 | 0.29 | 0.29 | 0.29 | 0.29 | 0.16 | 0.16 | 0.09 |
| | | Amount of EO-TPO+ photopolymerization initiator (B) (in total ink) | | | 8.0% | 8.0% | 8.0% | 8.0% | 8.0% | 8.0% | 8.0% | 8.0% | 8.0% | 8.0% | 8.0% | 8.0% | 8.0% | 8.0% | 8.0% |
| Evaluation results | | Thin film surface curability | | | 3 | 3 | 2 | 4 | 3 | 3 | 4 | 3 | 3 | 3 | 3 | 3 | 3 | 3 | 4 |
| | | Thick film internal curability | | | 3 | 2 | 2 | 4 | 4 | 3 | 4 | 4 | 4 | 3 | 3 | 3 | 4 | 4 | 3 |
| | | Ink film strength | | | 2 | 2 | 2 | 4 | 4 | 2 | 4 | 3 | 3 | 3 | 3 | 3 | 3 | 3 | 3 |
| | | Discharge stability | | | 3 | 3 | 4 | 4 | 4 | 4 | 4 | 4 | 4 | 4 | 4 | 4 | 3 | 3 | 4 |

**[Table 1-3]**

| | | | | | Example | | | | | | | | | | | | | | |
|---|---|---|---|---|---|---|---|---|---|---|---|---|---|---|---|---|---|---|---|
| | | | | | 31 | 32 | 33 | 34 | 35 | 36 | 37 | 38 | 39 | 40 | 41 | 42 | 43 | 44 | 45 |
| Ink No. | | | | | 31 | 32 | 33 | 34 | 35 | 36 | 37 | 38 | 39 | 40 | 41 | 42 | 43 | 44 | 45 |
| Blending amount | Black pigment dispersion | | | | 20.0 | 20.0 | 20.0 | 20.0 | 20.0 | 20.0 | 20.0 | 20.0 | 20.0 | 20.0 | 20.0 | 20.0 | 20.0 | 20.0 | 20.0 |
| | Polymerizable compound | Polyfunctional monomer | Polymerizable compound (A) | Viscoat #195 | | | | | | | | | | | | | | | |
| | | | | Viscoat #230 | 30.0 | 30.0 | 30.0 | 30.0 | 30.0 | 30.0 | 30.0 | 30.0 | 30.0 | 30.0 | 30.0 | 30.0 | 30.0 | 30.0 | 30.0 |
| | | | | Viscoat #260 | | | | | | | | | | | | | | | |
| | | | | CD595 | | | | | | | | | | | | | | | |
| | | | | SR341 | | | | | | | | | | | | | | | |
| | | | Compound represented by general formula (C) | Photomer 4050 | | | | | | | | | | | | | | | |
| | | | | Photomer 4054 | | | | | | | | | | | | | | | |
| | | | Polymerizable compound having a propylene oxide group | Miramer M222 | 22.5 | 29.5 | 31.5 | 23.5 | 22.5 | 15.5 | 25.5 | 13.5 | 5.5 | 22.5 | 24.5 | 31.5 | 22.5 | 13.5 | 31.5 |
| | | | | SR9003 | | | | | | | | | | | | | | | |
| | | | VEEA | | 15.0 | 10.0 | 10.0 | 15.0 | 15.0 | 20.0 | 10.0 | 20.0 | 26.0 | 15.0 | 15.0 | 10.0 | 15.0 | 20.0 | 10.0 |
| | | | Aronix M-350 | | | | | | | | | | | | | | | | |
| | | Monofunctional monomer | Polymerizable compound (A) | IBA | | | | | | | | | | | | | | | |
| | | | | INNA | | | | | | | | | | | | | | | |
| | | | | LA | | | | | | | | | | | | | | | |
| | | | Viscoat 192 | | | | | | | | | | | | | | | | |
| | | | Viscoat 160 | | | | | | | | | | | | | | | | |
| | | | IBXA | | | | | | | | | | | | | | | | |
| | | | NVC | | | | | | | | | | | | | | | | |
| | | | 4-HBA | | | | | | | | | | | | | | | | |
| | | Oligomer | Ebecryl LEO 10552 | | | | | | | | | | | | | | | | |
| | | | CN371 | | | | | | | | | | | | | | | | |
| | Photopolymerization Initiator | Acylphosphine oxide-type initiator | EO-TPO | Omnirad TPO-L | 6.0 | 4.0 | 2.0 | 4.0 | 4.0 | 4.0 | 8.0 | 10.0 | 12.0 | | | 4.0 | 4.0 | 4.0 | 4.0 |
| | | | | Omnipol TP | | | | | | | | | | 4.0 | 4.0 | | | | |
| | | | Photopolymerization initiator (B) | Omnirad TPO | | | | | | | | | | 6.0 | | 2.0 | 6.0 | 10.0 | |
| | | | | Omnirad 819 | 4.0 | 4.0 | 4.0 | 5.0 | 4.0 | 4.0 | 4.0 | 4.0 | 4.0 | | 4.0 | | | | 2.0 |
| | | Other photopolymerization initiators | Benzophenone-type | Omnirad BMS | 2.0 | 2.0 | 2.0 | 2.0 | 4.0 | 6.0 | 2.0 | 2.0 | 2.0 | 2.0 | 2.0 | 2.0 | 2.0 | 2.0 | 2.0 |
| | | | | ESACURE 1001M | | | | | | | | | | | | | | | |
| | | | Thioxanthone-type | Omnipol BL 728 | | | | | | | | | | | | | | | |
| | | | | Omnirad DETX | | | | | | | | | | | | | | | |
| | | | Hydroxyacetophenone-type | ESACURE ONE | | | | | | | | | | | | | | | |
| | | | | ESACURE KIP160 | | | | | | | | | | | | | | | |
| | | | Alkylaminoacetophenone-type | Omnird 379 | | | | | | | | | | | | | | | |
| | Surface additive | Silicone-type | TEGO GLIDE 432 | | 0.5 | 0.5 | 0.5 | 0.5 | 0.5 | 0.5 | 0.5 | 0.5 | 0.5 | 0.5 | 0.5 | 0.5 | 0.5 | 0.5 | 0.5 |
| | | | BYK-331 | | | | | | | | | | | | | | | | |
| | | | BYK-UV 3510 | | | | | | | | | | | | | | | | |
| | | | TEGORAD 2300 | | | | | | | | | | | | | | | | |
| | | Acrylic | BYK-350 | | | | | | | | | | | | | | | | |
| | Others | | | | | | | | | | | | | | | | | | |
| | Total amount | | | | 100 | 100 | 100 | 100 | 100 | 100 | 100 | 100 | 100 | 100 | 100 | 100 | 100 | 100 | 100 |
| Specifications | | Amount of polyfunctional polymerizable compound (in total amount of polymerizable compound) | | | 100% | 100% | 100% | 100% | 100% | 100% | 100% | 100% | 100% | 100% | 100% | 100% | 100% | 100% | 100% |
| | | Amount of polymerizable compound (A) (in total ink) | | | 30.0% | 30.0% | 30.0% | 30.0% | 30.0% | 30.0% | 30.0% | 30.0% | 30.0% | 30.0% | 30.0% | 30.0% | 30.0% | 30.0% | 30.0% |
| | | Amount of polymerizable compound (A) (in total ink) | | | 30.0% | 30.0% | 30.0% | 30.0% | 30.0% | 30.0% | 30.0% | 30.0% | 30.0% | 30.0% | 30.0% | 30.0% | 30.0% | 30.0% | 30.0% |
| | | Ratio of amount of polymerizable compound (A)/amount of EO-TPO | | | 5.00 | 7.50 | 15.00 | 7.50 | 7.50 | 7.50 | 3.75 | 3.00 | 2.50 | 7.50 | 7.50 | 7.50 | 7.50 | 7.50 | 7.50 |
| | | Amount of PO group-containing monomer (in total ink) | | | 36.5% | 43.5% | 45.5% | 37.5% | 36.5% | 29.5% | 39.5% | 27.5% | 19.5% | 36.5% | 38.5% | 45.5% | 36.5% | 27.5% | 45.5% |
| | | Ratio of amount of polymerizable compound (A)/amount of PO group-containing monomer | | | 0.82 | 0.69 | 0.66 | 0.80 | 0.82 | 1.02 | 0.76 | 1.09 | 1.54 | 0.82 | 0.78 | 0.66 | 0.82 | 1.09 | 0.66 |
| | | Ratio of amount of EO-TPO/amount of PO group-containing monomer | | | 0.16 | 0.09 | 0.04 | 0.11 | 0.11 | 0.14 | 0.20 | 0.36 | 0.62 | 0.11 | 0.10 | 0.09 | 0.11 | 0.15 | 0.09 |
| | | Amount of EO-TPO+ photopolymerization initiator (B) (in total ink) | | | 10.0% | 8.0% | 6.0% | 9.0% | 8.0% | 8.0% | 12.0% | 14.0% | 16.0% | 10.0% | 8.0% | 6.0% | 10.0% | 14.0% | 6.0% |
| Evaluation results | | Thin film surface curability | | | 4 | 3 | 2 | 4 | 4 | 4 | 4 | 4 | 4 | 4 | 4 | 4 | 4 | 4 | 4 |
| | | Thick film internal curability | | | 4 | 4 | 4 | 4 | 4 | 4 | 4 | 4 | 3 | 4 | 4 | 2 | 4 | 4 | 2 |
| | | Ink film strength | | | 4 | 3 | 2 | 4 | 4 | 4 | 4 | 4 | 3 | 4 | 4 | 2 | 4 | 4 | 2 |
| | | Discharge stability | | | 4 | 4 | 4 | 4 | 4 | 4 | 4 | 4 | 4 | 4 | 4 | 4 | 4 | 4 | 4 |

**[Table 1-4]**

| | | | | | Example | | | | | | | | | | | |
|---|---|---|---|---|---|---|---|---|---|---|---|---|---|---|---|---|
| | | | | | 46 | 47 | 48 | 49 | 50 | 51 | 52 | 53 | 54 | 55 | 56 | 57 |
| Ink No. | | | | | 46 | 47 | 48 | 49 | 50 | 51 | 52 | 53 | 54 | 55 | 56 | 57 |
| Blending amount | Black pigment dispersion | | | | 20.0 | 20.0 | 20.0 | 20.0 | 20.0 | 20.0 | 20.0 | 20.0 | 20.0 | 20.0 | 20.0 | 20.0 |
| | Polymerizable compound | Polyfunctional monomer | Polymerizable compound (A) | Viscoat #195 | | | | | | | | | | | | |
| | | | | Viscoat #230 | 30.0 | 30.0 | 30.0 | 30.0 | 30.0 | 30.0 | 30.0 | 30.0 | 30.0 | 30.0 | 30.0 | 30.0 |
| | | | | Viscoat #260 | | | | | | | | | | | | |
| | | | | CD595 | | | | | | | | | | | | |
| | | | | SR341 | | | | | | | | | | | | |
| | | | Compound represented by general formula (C) | Photomer 4050 | | | | | | | | | | | | |
| | | | | Photomer 4054 | | | | | | | | | | | | |
| | | | Polymerizable compound having a propylene oxide group | Miramer M222 | 23.5 | 26.5 | 15.5 | 24.5 | 31.0 | 24.5 | 24.5 | 24.5 | 24.5 | 24.5 | 24.5 | 24.5 |
| | | | | SR9003 | | | | | | | | | | | | |
| | | | VEEA | | 15.0 | 15.0 | 20.0 | 15.0 | 10.0 | 15.0 | 15.0 | 15.0 | 15.0 | 15.0 | 15.0 | 15.0 |
| | | | Aronix M-350 | | | | | | | | | | | | | |
| | | Monofunctional monomer | Polymerizable compound (A) | IBA | | | | | | | | | | | | |
| | | | | INNA | | | | | | | | | | | | |
| | | | | LA | | | | | | | | | | | | |
| | | | Viscoat 192 | | | | | | | | | | | | | |
| | | | Viscoat 160 | | | | | | | | | | | | | |
| | | | IBXA | | | | | | | | | | | | | |
| | | | NVC | | | | | | | | | | | | | |
| | | | 4-HBA | | | | | | | | | | | | | |
| | | Oligomer | Ebecryl LEO 10552 | | | | | | | | | | | | | |
| | | | CN371 | | | | | | | | | | | | | |
| | Photopolymerization Initiator | Acylphosphine oxide-type initiator | EO-TPO | Omnirad TPO-L | 4.0 | 4.0 | 4.0 | 4.0 | 4.0 | 4.0 | 4.0 | 4.0 | 4.0 | 4.0 | 4.0 | 4.0 |
| | | | | Omnipol TP | | | | | | | | | | | | |
| | | | Photopolymerization initiator (B) | Omnirad TPO | | | 8.0 | | | | | | | | | |
| | | | | Omnirad 819 | 5.0 | 2.0 | | 4.0 | 4.0 | 4.0 | 4.0 | 4.0 | 4.0 | 4.0 | 4.0 | 4.0 |
| | | Other photopolymerization initiators | Benzophenone-type | Omnirad BMS | 2.0 | 2.0 | 2.0 | | | | | | 10 | | 2.0 | 2.0 |
| | | | | ESACURE 1001M | | | | 2.0 | | | | | | 1.0 | | |
| | | | Thioxanthone-type | Omnipol BL 728 | | | | | | | | | | | | |
| | | | | Omnirad DETX | | | | | 0.5 | | | | | | | |
| | | | Hydroxyacetophenone-type | ESACURE ONE | | | | | | 2.0 | | | 1.0 | | | |
| | | | | ESACURE KIP160 | | | | | | | 2.0 | | | | | |
| | | | Alkylaminoacetophenone-type | Omnird 379 | | | | | | | | 2.0 | | 1.0 | | |
| | Surface additive | Silicone-type | TEGO GLIDE 432 | | 0.5 | 0.5 | 0.5 | 0.5 | 0.5 | 0.5 | 0.5 | 0.5 | 0.5 | 0.5 | | |
| | | | BYK-331 | | | | | | | | | | | | | |
| | | | BYK-UV 3510 | | | | | | | | | | | | 0.5 | |
| | | | TEGORAD 2300 | | | | | | | | | | | | | |
| | | Acrylic | BYK-350 | | | | | | | | | | | | | 0.5 |
| | Others | | | | | | | | | | | | | | | |
| | Total amount | | | | 100 | 100 | 100 | 100 | 100 | 100 | 100 | 100 | 100 | 100 | 100 | 100 |
| Specifications | | Amount of polyfunctional polymerizable compound (in total amount of polymerizable compound) | | | 100% | 100% | 100% | 100% | 100% | 100% | 100% | 100% | 100% | 100% | 100% | 100% |
| | | Amount of polymerizable compound (A) (in total ink) | | | 30.0% | 30.0% | 30.0% | 30.0% | 30.0% | 30.0% | 30.0% | 30.0% | 30.0% | 30.0% | 30.0% | 30.0% |
| | | Amount of polymerizable compound (A) (in total ink) | | | 30.0% | 30.0% | 30.0% | 30.0% | 30.0% | 30.0% | 30.0% | 30.0% | 30.0% | 30.0% | 30.0% | 30.0% |
| | | Ratio of amount of polymerizable compound (A)/amount of EO-TPO | | | 7.50 | 7.50 | 7.50 | 7.50 | 7.50 | 7.50 | 7.50 | 7.50 | 7.50 | 7.50 | 7.50 | 7.50 |
| | | Amount of PO group-containing monomer (in total ink) | | | 37.5% | 40.5% | 29.5% | 38.5% | 45.0% | 38.5% | 38.5% | 38.5% | 38.5% | 38.5% | 38.5% | 38.5% |
| | | Ratio of amount of polymerizable compound (A)/amount of PO group-containing monomer | | | 0.80 | 0.74 | 1.02 | 0.78 | 0.67 | 0.78 | 0.78 | 0.78 | 0.78 | 0.78 | 0.78 | 0.78 |
| | | Ratio of amount of EO-TPO/amount of PO group-containing monomer | | | 0.11 | 0.10 | 0.14 | 0.10 | 0.09 | 0.10 | 0.10 | 0.10 | 0.10 | 0.10 | 0.10 | 0.10 |
| | | Amount of EO-TPO+ photopolymerization initiator (B) (in total ink) | | | 9.0% | 6.0% | 12.0% | 8.0% | 8.0% | 8.0% | 8.0% | 8.0% | 8.0% | 8.0% | 8.0% | 8.0% |
| Evaluation results | | Thin film surface curability | | | 4 | 4 | 4 | 4 | 4 | 4 | 4 | 3 | 4 | 4 | 4 | 4 |
| | | Thick film internal curability | | | 4 | 2 | 4 | 4 | 4 | 3 | 3 | 4 | 4 | 4 | 4 | 4 |
| | | Ink film strength | | | 4 | 2 | 4 | 4 | 4 | 4 | 4 | 4 | 4 | 4 | 4 | 4 |
| | | Discharge stability | | | 4 | 4 | 4 | 4 | 4 | 4 | 4 | 4 | 4 | 4 | 4 | 3 |

**[Table 1-5]**

| | | | | | Comparative Example | | | | | | | | | |
|---|---|---|---|---|---|---|---|---|---|---|---|---|---|---|
| | | | | | 1 | 2 | 3 | 4 | 5 | 6 | 7 | 8 | 9 | 10 |
| Ink No. | | | | | 1 | 2 | 3 | 4 | 5 | 6 | 7 | 8 | 9 | 10 |
| Blending amount | Black pigment dispersion | | | | 20.0 | 12.5 | 20.0 | 20.0 | 20.0 | 20.0 | 20.0 | 20.0 | 20.0 | 20.0 |
| | Polymerizable compound | Polyfunctional monomer | Polymerizable compound (A) | Viscoat #195 | | | | | | | | | | |
| | | | | Viscoat #230 | | 55.0 | 30.0 | 30.0 | 30.0 | 30.0 | 57.0 | 10.0 | 30.0 | 30.0 |
| | | | | Viscoat #260 | | | | | | | | | | |
| | | | | CD595 | | | | | | | | 30.4 | | |
| | | | | SR341 | | | | | | | | | | |
| | | | Compound represented by general formula (C) | Photomer 4050 | | 20.0 | | | | | | | | |
| | | | | Photomer 4054 | | | 20.0 | | | | | | | |
| | | | Polymerizable compound having a propylene oxide group | Miramer M222 | 35.0 | | | | | | | | 33.5 | 33.5 |
| | | | | SR9003 | | | | | | | | 5.0 | | |
| | | | VEEA | | 34.5 | | 19.5 | 2.5 | 2.5 | 2.5 | | | 10.0 | 10.0 |
| | | | Aronix M-350 | | | | | | | | | 4.0 | | |
| | | Monofunctional monomer | Polymerizable compound (A) | IBA | | | | | | | | | | |
| | | | | INNA | | | | | | | | | | |
| | | | | LA | | | | | | | | 7.1 | | |
| | | | Viscoat 192 | | | | | 37.0 | | | | | | |
| | | | Viscoat 160 | | | | | | 37.0 | | | | | |
| | | | IBXA | | | | | | | 37.0 | | | | |
| | | | NVC | | | | | | | | | | | |
| | | | 4-HBA | | | | | | | | | 6.5 | | |
| | | Oligomer | Ebecryl LEO 10552 | | | | | | | | 6.6 | | | |
| | | | CN371 | | | | | | | | | 6.0 | | |
| | Photopolymerization Initiator | Acylphosphine oxide-type initiator | EO-TPO | Omnirad TPO-L | 4.0 | 5.0 | 4.0 | 4.0 | 4.0 | 4.0 | 3.0 | 3.5 | | 4.0 |
| | | | | Omnipol TP | | | | | | | | | | |
| | | | Photopolymerization initiator (B) | Omnirad TPO | | 3.5 | | | | | | | | |
| | | | | Omnirad 819 | 4.0 | | 4.0 | 4.0 | 4.0 | 4.0 | 3.8 | 3.0 | 4.0 | |
| | | Other photopolymerization initiators | Benzophenone-type | Omnirad BMS | 2.0 | | 2.0 | 2.0 | 2.0 | 2.0 | | | 2.0 | 2.0 |
| | | | | ESACURE 1001M | | | | | | | 1.6 | | | |
| | | | Thioxanthone-type | Omnipol BL 728 | | | | | | | 1.0 | | | |
| | | | | Omnirad DETX | | | | | | | | 0.5 | | |
| | | | Hydroxyacetophenone-type | ESACURE ONE | | | | | | | | 3.0 | | |
| | | | | ESACURE KIP160 | | | | | | | 5.5 | | | |
| | | | Alkylaminoacetophenone-type | Omnird 379 | | 3.5 | | | | | | 0.5 | | |
| | Surface additive | Silicone-type | TEGO GLIDE 432 | | 0.5 | | 0.5 | 0.5 | 0.5 | 0.5 | | | 0.5 | 0.5 |
| | | | BYK-331 | | | | | | | | | 0.5 | | |
| | | | BYK-UV 3510 | | | 0.5 | | | | | | | | |
| | | | TEGORAD 2300 | | | | | | | | 1.5 | | | |
| | | Acrylic | BYK-350 | | | | | | | | | | | |
| | Others | | | | | | | | | | | | | |
| | Total amount | | | | 100 | 100 | 100 | 100 | 100 | 100 | 100 | 100 | 100 | 100 |
| Specifications | | Amount of polyfunctional polymerizable compound (in total amount of polymerizable compound) | | | 100% | 100% | 100% | 55.7% | 55.7% | 55.7% | 100% | 78.8% | 100% | 100% |
| | | Amount of polymerizable compound (A) (in total ink) | | | 0% | 55.0% | 30.0% | 30.0% | 30.0% | 30.0% | 57.0% | 47.5% | 30.0% | 30.0% |
| | | Amount of polymerizable compound (A) (in total ink) | | | 0% | 55.0% | 30.0% | 30.0% | 30.0% | 30.0% | 57.0% | 47.5% | 30.0% | 30.0% |
| | | Ratio of amount of polymerizable compound (A)/amount of EO-TPO | | | 0 | 11.00 | 7.50 | 7.50 | 7.50 | 7.50 | 19.00 | 13.57 | - | 7.50 |
| | | Amount of PO group-containing monomer (in total ink) | | | 49.0% | 8.8% | 14.0% | 14.0% | 14.0% | 14.0% | 14.0% | 19.0% | 47.5% | 47.5% |
| | | Ratio of amount of polymerizable compound (A)/amount of PO group-containing monomer | | | 0 | 6.29 | 2.14 | 2.14 | 2.14 | 2.14 | 4.07 | 2.50 | 0.63 | 0.63 |
| | | Ratio of amount of EO-TPO/amount of PO group-containing monomer | | | 0.08 | 0.57 | 0.29 | 0.29 | 0.29 | 0.29 | 0.21 | 0.18 | 0 | 0.08 |
| | | Amount of EO-TPO+ photopolymerization initiator (B) (in total ink) | | | 8.0% | 8.5% | 8.0% | 8.0% | 8.0% | 8.0% | 6.8% | 6.5% | 4.0% | 4.0% |
| Evaluation results | | Thin film surface curability | | | 1 | 1 | 1 | 1 | 1 | 1 | 3 | 3 | 1 | 4 |
| | | Thick film internal curability | | | 4 | 4 | 4 | 1 | 1 | 1 | 4 | 4 | 4 | 1 |
| | | Ink film strength | | | 1 | 1 | 1 | 1 | 1 | 1 | 4 | 4 | 1 | 1 |
| | | Discharge stability | | | 2 | 3 | 2 | 4 | 4 | 4 | 1 | 1 | 3 | 4 |

Details of the raw material names described in Table 1 are as follows.

### <Polymerizable Compound (A)>

·Biscoat #195: 1,4 butanediol diacrylate (manufactured by OSAKA ORGANIC CHEMICAL INDUSTRY LTD.)
·Biscoat #230: 1,6-hexanediol diacrylate (manufactured by OSAKA ORGANIC CHEMICAL INDUSTRY LTD.)
·Biscoat #260: 1,9-nonanediol diacrylate (manufactured by OSAKA ORGANIC CHEMICAL INDUSTRY LTD.)
·CD595: 1, 10-decanediol diacrylate (manufactured by Sartomer)
·SR341: 3-methyl-1,5-pentanediol diacrylate (manufactured by Sartomer)
·IBA: isobutyl acrylate (manufactured by Toagosei Co., Ltd.)
·INNA: isononyl acrylate (manufactured by OSAKA ORGANIC CHEMICAL INDUSTRY LTD.)
·LA: lauryl acrylate (manufactured by OSAKA ORGANIC CHEMICAL INDUSTRY LTD.)

### <Other polymerizable compounds>

### (Compound represented by general formula (C))

·Photomer 4050: polyethylene glycol 200 diacrylate (number of EO groups = 4 to 5) (manufactured by IGM RESINS)
·Photomer 4054: polyethylene glycol 400 diacrylate (number of EO groups ≈ 9) (manufactured by IGM RESINS)

### (Oligomer)

·Ebecryl LEO 10552: amine-modified polyether (meth)acrylate oligomer, 3.5 functional, weight average molecular weight 1,000 (manufactured by Allnex)
·CN371: amine-modified acrylic (meth)acrylate oligomer, bifunctional, weight average molecular weight 1,600 (manufactured by Sartomer)

### (Others)

·Miramer M222: dipropylene glycol diacrylate (manufactured by Miwon Specialty Chemical Co., Ltd.)
. SR9003: propoxylated (2) neopentyl glycol diacrylate (manufactured by Sartomer)
·VEEA: 2-(2-vinyloxyethoxy) ethyl acrylate (manufactured by Nippon Shokubai Co., Ltd.)
·Aronix M-350: trimethylolpropane EO-modified triacrylate (manufactured by Toagosei Co., Ltd.)
·Biscoat #192: 2-phenoxyethyl acrylate (manufactured by OSAKA ORGANIC CHEMICAL INDUSTRY LTD.)
·Biscoat #160: benzyl acrylate (manufactured by OSAKA ORGANIC CHEMICAL INDUSTRY LTD.)
·IBXA: isobornyl acrylate (manufactured by OSAKA ORGANIC CHEMICAL INDUSTRY LTD.)
·NVC: N-vinyl caprolactam (manufactured by BASF)
·4-HBA: 4-hydroxybutyl acrylate (manufactured by OSAKA ORGANIC CHEMICAL INDUSTRY LTD.)

### <Photopolymerization initiator>

·Omnirad TPO-L: ethoxyphenyl (2,4,6-trimethylbenzoyl) phosphine oxide (manufactured by IGM RESINS)
·Omnipol TP: (2,4,6-trimethylbenzoyl) phosphine oxide multimer (manufactured by IGM RESINS)
·Omnirad TPO: 2,4,6-trimethylbenzoyl-diphenylphosphine oxide (manufactured by IGM RESINS)
·Omnirad 819: bis(2,4,6-trimethylbenzoyl)-phenylphosphine oxide (manufactured by IGM RESINS)
·Omnirad BMS: [4-(methylphenylthio) phenyl]-phenylmethane (manufactured by IGM RESINS)
·ESACURE 1001M: 1-[4-(4-benzoylphenylsulfanyl) phenyl]-2 methyl-2-(4-methylphenylsulfonyl) propan-1-one
·Omnipol BL 728: mixture of polymeric photopolymerization initiators mainly containing polybutylene glycol-bis(9-oxo-9H-thioxanthenyloxy) acetate (number average molecular weight: 660) (manufactured by IGM RESINS)
·Omnirad DETX: 2,4-diethylthioxanthen-9-one (manufactured by IGM RESINS)
·ESACURE ONE: oligo [2-hydroxy-2-methyl-[1-(methylvinyl) phenyl] propanone] (manufactured by IGM RESINS)
·ESACURE KIP160: 1,1-(oxydi-4,1-phenylene) bis(2-hydroxy-methylpropan-1-one) (manufactured by IGM RESINS)
·Omnirad 379: 2-dimethylamino-2-(4-methylbenzyl)-1-(4-morpholinophenyl)-1-butanone (manufactured by IGM RESINS)

### <Other additives>

·TEGO GLIDE 432: polyether-modified silicone-type surface additive (manufactured by Evonik)
·BYK-331: polyether-modified silicone-type surface additive (manufactured by BYK Japan KK)
·BYK-UV 3510: polyether-modified silicone-type surface additive (manufactured by BYK Japan KK)
·TEGORAD 2300: polyether-modified silicone acrylate (manufactured by Evonik)
·BYK-350: acrylic surface additive (manufactured by BYK Japan KK)

### <2> Preparation of printed matter

Printed matters were manufactured as follows using the inks prepared above.

An inkjet printing apparatus ("OnePassJET" manufactured by Tritek Co., Ltd.) with an inkjet head (resolution: 600 dpi × 600 dpi) manufactured by Kyocera Corporation mounted on an upper part of a conveyor capable of conveying a substrate, and an ultraviolet lamp for main curing (240 W/cm² metal halide lamp manufactured by GEW Co., Ltd.) further prepared on a downstream side with respect to a conveyance direction of the substrate, was equipped. Thereafter, the inkjet head was filled with each of the inks manufactured above. Next, a PET substrate "PET50 (K2411)" manufactured by LINTEC CORPORATION was fixed onto the conveyor, and then the conveyor was driven at a speed of 50 m/min. When the PET substrate passed under a portion where the inkjet head was mounted, an image was printed under a printing condition where the discharge droplet amount is 14 pl. Then, even after discharge of the ink, the conveyor was driven at the same speed as it was, and when the PET substrate passed under a portion where the ultraviolet lamp for main curing was installed, irradiation with an ultraviolet ray was performed to prepare a printed matter.

Note that the output of the ultraviolet lamp for main curing was adjusted in advance such that an integrated light amount was 200 mJ/cm². In addition, as the image, a solid image having a coverage rate of 100% and a light tone solid image having a coverage rate of 25% were printed.

### [Examples 1 to 57 and Comparative Examples 1 to 10]

Using the inks and printed matters prepared above, the following evaluations were performed. Evaluation results are as presented in Table 1.

### <Evaluation of thin film surface curability>

A surface of the light tone solid image printed matter having a coverage rate of 25%, prepared using the above method was rubbed with a cotton swab, and the cotton swab was checked to see whether or not the ink in an uncured state adhered to the cotton swab or not. When the ink adhered to the cotton swab, the printed matter was fixed to the conveyor of the inkjet printing apparatus, and only irradiation with the ultraviolet lamp for main curing was performed without performing ink printing, and once again, the printed matter was rubbed with a cotton swab, and was checked to see whether or not ink adhered to the cotton swab. This action was repeated, and the number of times of passage required until the ink in an uncured state no longer adhered to a cotton swab was confirmed. Evaluation criteria were as follows, and a score of two or more were determined to be practicable.

### (Evaluation criteria)

4: An ink in an uncured state no longer adhered to a cotton swab after a total of one passage (no need of additional ultraviolet irradiation).

3: An ink in an uncured state no longer adhered to a cotton swab after a total of two passages (when additional ultraviolet irradiation was performed once).

2: An ink in an uncured state no longer adhered to a cotton swab after a total of three passages (when additional ultraviolet irradiation was performed twice).

1: Passage with irradiation by an ultraviolet lamp needed to be performed four or more times in total (additional ultraviolet irradiation needed to be performed three or more times) until an ink in an uncured state no longer adhered to a cotton swab.

### <Evaluation of thick film internal curability>

A slit was made in a solid image printed matter having a coverage rate of 100%, prepared using the above method with a cutter, and a cellophane tape (width: 18 mm) manufactured by Nichiban Co., Ltd. was firmly attached thereto so as to intersect the slit. Then, the end of the cellophane tape was held and the cellophane tape was instantaneously peeled off while an angle of 60 degrees was maintained. The adhesive surface of the cellophane tape after the cellophane tape was peeled off was visually evaluated to evaluate internal curability. When an ink adhered to the adhesive surface of the cellophane tape, the printed matter was fixed to the conveyor of the inkjet printing apparatus, and only irradiation with the ultraviolet lamp for main curing was performed without performing ink printing, and then the cellophane tape was confirmed again to see whether or not adhesion of the ink was seen. This action was repeated, and the number of times of passage required until the ink no longer adhered to the cellophane tape was confirmed. Evaluation criteria were as follows, and a score of two or more were determined to be practicable.

### (Evaluation criteria)

4: An ink in an uncured state no longer adhered to a cellophane tape after a total of one passage (no need of additional ultraviolet irradiation).

3: An ink in an uncured state no longer adhered to a cellophane tape after a total of two passages (when additional ultraviolet irradiation was performed once).

2: An ink in an uncured state no longer adhered to a cellophane tape after a total of three passages (when additional ultraviolet irradiation was performed twice).

1: Passage with irradiation by an ultraviolet lamp needed was performed four or more times in total (additional ultraviolet irradiation needed to be performed three or more times) until an ink in an uncured state no longer adhered to a cellophane tape.

### <Evaluation of ink film strength>

A surface of a solid image printed matter having a coverage rate of 100%, prepared using the above method was rubbed with a coin, and confirmed whether or not the printed matter was scratched. **In** the case of scratches, the printed matter was fixed to the conveyor of the inkjet printing apparatus, and only irradiation with the ultraviolet lamp for main curing was performed without performing ink printing, and then the presence or absence of scratches on the printed matter when the surface of the printed matter was rubbed with a coin was confirmed again. This action was repeated, and the number of times of passage required until the printed matter was no longer scratched was confirmed. Evaluation criteria were as follows, and a score of two or more were determined to be practicable.

### (Evaluation criteria)

4: A printed matter was not scratched by coin rubbing after a total of one passage (no need of additional ultraviolet irradiation).

3: A printed matter was not scratched by coin rubbing after a total of two passages (when additional ultraviolet irradiation was performed once).

2: A printed matter was not scratched by coin rubbing after a total of three passages (when additional ultraviolet irradiation was performed twice).

1: Passage with irradiation by an ultraviolet lamp needed to be performed four or more times in total (additional ultraviolet irradiation needed to be performed three or more times) until a printed matter was no longer scratched by coin rubbing.

### <Evaluation of discharge stability>

A machine equipped with a temperature-adjustable inkjet head ("CA4" manufactured by TOSHIBA TEC CORPORATION, number of nozzles: 318) was filled with each of the inks prepared above. Next, the temperature of the head was controlled such that an ink viscosity at the time of discharge was 8 to 9 mPa•s, and it was checked that there were no nozzles from which the ink was not discharged. Thereafter, the ink was continuously discharged at a drive frequency of 6 kHz. Then, the discharge stability was evaluated by checking the number of nozzles (number of nozzle losses) that failed to discharge the ink after 60 minutes of continuous discharge. Evaluation criteria were as follows, and a score of two or more were determined to be practicable.

### (Evaluation criteria)

4: The number of nozzle losses was 2 or less.

3: The number of nozzle losses was 3 to 5.

2: The number of nozzle losses was 6 to 10.

1: The number of nozzle losses was 11 or more.

As a result of the evaluation in Examples 1 to 57 where each contains the polymerizable compound (A), EO-TPO, and the photopolymerization initiator (B), and satisfies the requirements regarding the content of an oligomer, the content of a polyfunctional polymerizable compound, and the content of a compound represented by general formula (C), it could be confirmed that the inks had practically usable qualities in all the evaluated items.

On the other hand, in Comparative Example 1, since the polymerizable compound (A) was not contained, EO-TPO was hardly oriented on a surface, and thin film surface curability did not reach a practical level. As a result, it is considered that ink film strength also deteriorated. In addition, as compared with a case of containing the polymerizable compound (A), a decrease in discharge stability was also confirmed, which is considered to be caused by the occurrence of intermolecular interaction between the polymerizable compound and EO-TPO.

In addition, the inks of Comparative Examples 2 and 3 each contained a compound represented by general formula (C) in an amount of more than 15% by mass, resulting in poor thin film surface curability, ink film strength, and discharge stability, which are considered to be caused by compatibilization between the inks and EO-TPO.

Furthermore, in Comparative Example 4 to 6, since the amount of a polyfunctional polymerizable compound was less than 65% by mass in the total amount of the polymerizable compounds, the crosslinking density in an ink film decreased, and the inks were poor in all of thick film internal curability, thin film surface curability, and ink film strength.

In addition, in Comparative Examples 7 and 8 each containing an oligomer in an amount of 5% by mass or more, thin film surface curability, ink film strength, and discharge stability were at levels not suitable for practical use. Among these, in regard to the discharge stability, it is caused by the occurrence of intermolecular interaction between the oligomer and EO-TPO as in the case with Comparative Example 1. Note that Comparative Example 7 is a reproduction of the ink 7 described in Examples of Patent Literature 1 described above, and Comparative Example 8 is a reproduction, within a possible range, of the ink of Comparative Example 7 having a configuration closest to the ink of the present invention among the inks described in Examples of Patent Literature 2.

On the other hand, Comparative Example 9 is a system not containing EO-TPO, and the number of radicals generated on a surface of an ink film was reduced, whereby surface curability decreased. As a result, ink film strength also decreased. In addition, it is considered that discharge stability also deteriorated for the same reason to the above. In Comparative Example 10, since the photopolymerization initiator (B) was not contained, the number of radicals generated in an ink film was reduced contrary to Comparative Example 9, and thick film internal curability decreased. As a result, ink film strength also deteriorated.

## Claims

1. An ultraviolet curable inkjet ink comprising: a colorant; a polymerizable compound; and a photopolymerization initiator, wherein
65% by mass or more of the polymerizable compound is a polyfunctional polymerizable compound,
the polyfunctional polymerizable compound and/or a polymerizable compound other than the polyfunctional polymerizable compound contains a polymerizable compound (A) having a (meth)acryloyl group and a chain hydrocarbon group having 4 to 12 carbon atoms which may be branched,
the polymerizable compound does not contain an oligomer, or a content of the oligomer is 5% by mass or less in the polymerizable compound,
the polymerizable compound does not contain a compound represented by general formula (C) below, or a content of the compound represented by the general formula (C) is 15% by mass or less in the ultraviolet curable inkjet ink, and
the photopolymerization initiator includes ethoxyphenyl (2,4,6-trimethylbenzoyl) phosphine oxide and an acylphosphine oxide-type photopolymerization initiator (B) other than the ethoxyphenyl (2,4,6-trimethylbenzoyl) phosphine oxide.
General Formula (C): CH₂ = CH - CO - (O - CH₂CH₂)ₙ - O - CO - CH = CH₂
(In general formula (C), n represents an integer of 2 to 10.)

2. The ultraviolet curable inkjet ink according to claim 1, wherein a content of the polymerizable compound (A) is 10 to 60% by mass in the ultraviolet curable inkjet ink.

3. The ultraviolet curable inkjet ink according to claim 1 or 2, wherein a total amount of a content of the ethoxyphenyl (2,4,6-trimethylbenzoyl) phosphine oxide and a content of the acylphosphine oxide-type photopolymerization initiator (B) is 8 to 20% by mass in the ultraviolet curable inkjet ink.

4. The ultraviolet curable inkjet ink according to any one of claims 1 to 3,
wherein the photopolymerization initiator further contains at least one selected from the group consisting of a benzophenone-type photopolymerization initiator and a thioxanthone-type photopolymerization initiator.

5. A method for manufacturing a printed matter, the method comprising: a step of discharging the ultraviolet curable inkjet ink according to any one of claims 1 to 4 onto a substrate; and a step of irradiating the substrate with an ultraviolet ray from an ultraviolet ray irradiation means.
